(19) Europäisches Patentamt
European Patent Office
Office européen des brevets

(11) **EP 3 050 244 B1**

(12) **EUROPÄISCHE PATENTSCHRIFT**

(45) Veröffentlichungstag und Bekanntmachung des Hinweises auf die Patenterteilung:
**20.03.2019  Patentblatt 2019/12**

(51) Int Cl.:
***H04L 9/08*** *(2006.01)*

(21) Anmeldenummer: **14776584.6**

(22) Anmeldetag: **23.09.2014**

(86) Internationale Anmeldenummer:
**PCT/EP2014/002577**

(87) Internationale Veröffentlichungsnummer:
**WO 2015/043739 (02.04.2015 Gazette 2015/13)**

(54) **BEREITSTELLUNG UND VERWENDUNG PSEUDONYMER SCHLÜSSEL BEI HYBRIDER VERSCHLÜSSELUNG**

PROVISION AND USE OF PSEUDONYMOUS KEYS IN HYBRID ENCRYPTION

PRODUCTION ET UTILISATION DE CLÉS PSEUDONYMES DANS LE CRYPTAGE HYBRIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.09.2013  DE 102013110552**

(43) Veröffentlichungstag der Anmeldung:
**03.08.2016  Patentblatt 2016/31**

(73) Patentinhaber: **Bundesrepublik Deutschland, vertreten durch das Bundesministerium des Innern, vertreten durch das Bundesamt für Sicherheit 53175 Bonn (DE)**

(72) Erfinder: **BENDER, Jens 53173 Bonn (DE)**

(74) Vertreter: **Schohe, Stefan Boehmert & Boehmert Anwaltspartnerschaft mbB Pettenkoferstrasse 22 80336 München (DE)**

(56) Entgegenhaltungen:
**US-A1- 2011 150 212**

• **WATERS B R ET AL: "Receiver anonymity via incomparable public keys", PROCEEDINGS OF THE 10TH ACM CONFERENCE ON COMPUTER AND COMMUNICATIONS SECURITY; [ACM CONFERENCE ON COMPUTER AND COMMUNICATIONS SECURITY], WASHINGTON D.C., USA, Bd. CONF. 10, 27. Oktober 2003 (2003-10-27), XP002361168, DOI: 10.1145/948109.948127 ISBN: 978-1-58113-738-5**

## Beschreibung

Die vorliegende Erfindung betrifft ein Verfahren zum Bereitstellen von pseudonymen Schlüsseln für ein hybrides Verschlüsselungsverfahren, eine entsprechende Vorrichtung, ein Verfahren zum Verwenden von pseudonymen Schlüsseln in einem hybriden Verschlüsselungsverfahren, einen entsprechenden Sender, und ein hybrides Verschlüsselungsverfahren mit pseudonymen Schlüsseln sowie ein System. Ferner kann die vorliegende Erfindung eine Chipkarte, beispielsweise einen elektronischen Personalausweis, betreffen, welche pseudonyme Schlüssel für ein hybrides Verschlüsselungsverfahren bereitstellen kann.

Hybride Verschlüsselungsverfahren zur Absicherung einer Übertragung von Nachrichten, beispielsweise Textnachrichten, Dokumente, Datenströme und beliebige Inhalte, welche sich elektronisch oder digital repräsentieren und übertragen lassen, sind bekannt. Hierbei wird ein asymmetrisches Verschlüsselungsverfahren oder Public Key-Verfahren, beispielsweise RSA, ElGamal oder andere, verwendet, um einen symmetrischen Schlüssel zu verschlüsseln, mit dem die zu übertragende Nachricht mittels eines symmetrischen Verschlüsselungsverfahrens verschlüsselt wird, beispielsweise mittels AES, DES, IDEA oder andere. Dadurch kann sowohl die schnelle Ver- und Entschlüsselung symmetrischer Verfahren, als auch das einfache Schlüssel-Management asymmetrischer Verfahren ausgenutzt werden, beispielsweise bei der vergleichsweise einfachen Bereitstellung des öffentlichen Schlüssels zur Verschlüsselung der Nachricht.

Bei bisherigen hybriden Verfahren besitzt ein intendierter Empfänger E einer Nachricht ein asymmetrisches Schlüsselpaar, bestehend aus einem geheimen Schlüssel $k$ und einem öffentlichen Schlüssel $K$. Der öffentliche Schlüssel $K$ wird veröffentlicht, so dass ein Sender S der Nachricht diesen verwenden kann, um einen zufällig erzeugten zur Verschlüsselung der Nachricht genutzten symmetrischen Schlüssel zu verschlüsseln, der zusammen mit der Nachricht an den Empfänger E übertragen wird. Daher ist nur der Inhaber des geheimen Schlüssels $k$ in der Lage, den verschlüsselten symmetrischen Schlüssel zu entschlüsseln und mit diesem schließlich die Nachricht zu entschlüsseln. Hierbei ist das Schlüsselpaar $(k, K)$ unabhängig von einem Sender S einer Nachricht, da alle potentiellen Sender S einer Nachricht zur Verschlüsselung der Nachricht für einen bestimmten Empfänger E den gleichen öffentlichen Schlüssel $K$ verwenden.

Ein sicherheitskritisches Problem dieses Verfahrens besteht nun darin, dass durch das gleichbleibende Schlüsselpaar $(k, K)$ eine Zuordnung des Schlüsselpaars zum Empfänger E möglich wird, auch wenn dieser gegenüber den jeweiligen Sendern unter einem oder mehreren Pseudonymen auftritt. So können mehrere Sender durch Vergleich des öffentlichen Schlüssels $K$ auch dann feststellen, dass der Empfänger E ihrer Nachricht in jedem Fall der gleiche ist, wenn der Empfänger E gegenüber den Sendern pseudonym auftritt, da der öffentlichen Schlüssel, den der Empfänger E den potentiellen Sendern zur Verfügung stellt, für alle Sender gleich ist. Hierbei könnten die Sender beispielsweise einzelne, nur dem jeweiligen Sender individuell zur Verfügung gestellte personenbezogene Daten durch einen Abgleich untereinander vervollständigen, was einer gewünschten Pseudonymität des Empfängers E zuwiderlaufen würde.

Ein Nutzer könnte beispielsweise im Zusammenhang mit einer Identifizierung mit einem elektronischen Personalausweis einem ersten Dienstanbieter pseudonym ausgewählte personenbezogene Daten, beispielsweise das Alter, und einem weiteren Dienstanbieter pseudonym ein weiteres personenbezogenes Datum mitteilen, beispielsweise einen Wohnort. Durch einen Abgleich der den Dienstanbietern zur Verfügung gestellten öffentlichen Schlüssel für eine nachfolgende sichere Kommunikation mit einem hybriden Verschlüsselungsverfahren könnten bei Übereinstimmung trotz etwaiger Pseudonyme die personenbezogenen Daten derart vervollständigt werden, dass beiden Dienstanbieters sowohl das Alter als auch der Aufenthaltsort des Nutzers bekannt wären.

Hierbei muss berücksichtig werden, dass sich durch Ermittlung weiterer technischer Daten, beispielsweise Kommunikationsinformationen auf der Transportschicht oder der Vermittlungsschicht gemäß dem OSI-Modell oder beliebige andere kommunikationsspezifische Daten, welche bei einer Übertragung von Nachrichten zwischen einem Sender und einem Empfänger zwangsläufig anfallen, Rückschlüsse auf die Identität des Empfängers herleiten lassen. Um dieser Rückverfolgbarkeit auf einer unteren Kommunikationsebene zu begegnen, können geeignete Sicherheitsmaßnahmen ergriffen werden, beispielsweise die Verwendung von Anonymisierungsnetzwerken oder -diensten, wie das Tor-Netzwerk zur Anonymisierung von Verbindungsdaten. In der gesamten Beschreibung wird jedoch der Begriff der Pseudonymität auf einer höheren Kommunikationsschicht oder einer anwendungsorientierten Schicht, beispielsweise der Sitzungs-, Darstellungs- oder Anwendungsschicht des OSI-Modells betrachtet. Entsprechend soll es einem Empfänger möglich sein, sich unterschiedlichen Kommunikationspartnern gegenüber, das heißt den jeweiligen Sendern, mit unterschiedlichen pseudonymen Identitäten zu erkennen zu geben, so dass der jeweilige Sender anhand der pseudonymen Identität zwar nachvollziehen kann, dass er mit einem und demselben realen Empfänger kommuniziert, die Identität des Empfängers jedoch nicht ermitteln kann.

Es ist somit eine Aufgabe der vorliegenden Erfindung, ein hybrides Verschlüsselungsverfahren anzugeben, welches die Pseudonymität des Empfängers wahrt.

In Waters B R et al.: "Receiver anonymity via incomparable public keys", Proceedings of the 10th ACM Conference on computer and communications security;

ACM Conference on Computer and Communications Security, 2003, wird ein Ansatz zum Schutz von Anonymität eines Empfängers in einem potentiell gefährdeten Netzwerk offenbart. Der Empfänger generiert eine Vielzahl von öffentlichen Schlüsseln. Diese werden genutzt, um Nachrichten an den Empfänger zu verschlüsseln. Hierzu wird ein Generator $g$ zufällig gewählt und der Schlüssel als $(g, g^a)$ definiert, wobei $a$ ein privater Schlüssel des Empfängers ist. Die Schlüssel werden ferner in einem Diffie-Hellman-Schlüsselaustauschverfahren zur Erzeugung eines gemeinsamen geheimen Schlüssels eingesetzt.

US 2011/150212 A1 geht auf eine Verwendung einer Vielzahl von Identifikatoren ein, welche aus einem einzelnen privaten Schlüssel erzeugt sind und als Pseudonyme benutzt werden können.

Ein möglicher Ansatz könnte somit darin liegen, dass der Empfänger für jeden potentiellen Sender ein separates Schlüsselpaar erzeugt. Hierbei müsste jedoch für jeden Sender ein senderspezifischer privater Schlüssel vorgehalten werden, der gegen unberechtigte Nutzung geschützt werden müsste. Dies ist jedoch nicht wünschenswert, da einerseits die Erzeugung von separaten Schlüsselpaaren berechnungs- und zeitintensiv sein kann und andererseits hierfür zusätzliche Speicherplatzressourcen eines abgesicherten Speichers zur Verfügung gestellt werden müssten, der eine unberechtigte Nutzung der gespeicherten privaten Schlüssel verhindert oder zumindest erheblich erschwert. Solche abgesicherten Speicher sind oft teuer und durch bestehende Standardformate beschränkt, so dass eine Änderung bestehender Systeme teilweise nicht möglich ist. Ferner muss sich der Empfänger die Zuordnung der einzelnen Schlüssel zu den verschiedenen Sendern merken, wodurch weitere Speicherplatzressourcen und ein erhöhter Verwaltungsaufwand erforderlich wird.

Beispielsweise können zwar Chipkarten für eine sichere Speicherung von privaten Schlüsseln verwendet werden, sie sind jedoch in der Zahl möglicher privater Schlüssel beschränkt. Eine typische Chipkarte bzw. Smart Card, wie sie für den elektronischen Personalausweis verwendet wird, kann beispielsweise nur wenige Schlüssel in dem abgesicherten Speicher speichern. Weiterer Speicherplatz könnte höchstens nur zulasten der weiteren Funktionalität der Chipkarte bereitgestellt werden, indem beispielsweise einzelne Funktionen der Chipkarte deaktiviert oder gar nicht bereitgestellt werden und der ansonsten für diese Funktionen zur Verfügung gestellte Speicherplatz für Speicherung und Zuordnung der Schlüssel bereitgestellt wird. Dies würde jedoch die Funktionalität der Chipkarte einschränken. Ferner kann die Dauer zur Erstellung eines asymmetrischen Schlüsselpaars bei einer typischen Chipkarte beispielsweise bis zu einigen Minuten für ein RSA-Schlüsselpaar betragen, was in zahlreichen Anwendungsfällen nicht die gewünschte effiziente und spontane Nutzung erlauben würde.

Im Vergleich zum RSA-Verfahren bietet das El-Gamal-Verschlüsselungsverfahren die Möglichkeit, asymmetrische Schlüsselpaare schneller zu berechnen. Zur Schlüsselerzeugung kann hierbei eine Primzahl $p$ und ein Generator $g$ eines Restklassenkörpers $\mathbb{Z}_p^*$ modulo $p$ oder einer anderen kryptographischen Gruppe bestimmt werden. Der private Schlüssel $a$ wird als eine beliebige ganze Zahl mit $1 \leq a \leq p - 2$ gewählt, woraus dann $A = g^a \bmod p$ berechnet werden kann. Hieraus leitet sich nun der öffentliche Schlüssel als das Tripel $(p, g, A)$ ab. Obwohl das asymmetrische Schlüsselpaar gemäß ElGamal schneller generiert werden kann, bleibt nach wie vor das Problem bestehen, dass für jeden Sender ein individuelles asymmetrisches Schlüsselpaar erzeugt und zusammen mit einer Zuordnung von Schlüsselpaaren zu Sendern gespeichert werden muss, um die Pseudonymität des Empfängers gegenüber mehreren Sendern zu wahren.

Entsprechend ist eine weitere Aufgabe der vorliegenden Erfindung, einen Ansatz bereitzustellen, der die gewünschte Pseudonymität eines Empfängers wahrt und zudem eine schnelle Berechnung sowie eine optimierte Ausnutzung der verfügbaren Speicherressourcen erlaubt.

Die vorgenannten Aufgaben werden durch ein Verfahren zum Bereitstellen von pseudonymen Schlüsseln für ein hybrides Verschlüsselungsverfahren mit den Merkmalen des Hauptanspruchs und eine entsprechende Vorrichtung, durch ein Verfahren zum Verwenden von pseudonymen Schlüsseln in einem hybriden Verschlüsselungsverfahren und einen entsprechenden Sender, sowie durch ein hybrides Verschlüsselungsverfahren mit pseudonymen Schlüsseln und ein System gemäß den jeweiligen nebengeordneten Ansprüchen gelöst. Vorteilhafte Ausgestaltungen der Erfindung sind in den abhängigen Ansprüchen definiert.

Erfindungsgemäß ist ein Verfahren zum Bereitstellen von pseudonymen Schlüsseln für ein hybrides Verschlüsselungsverfahren angegeben, das ein Bereitstellen eines öffentlichen Schlüssels für einen Sender umfasst, wobei der öffentliche Schlüssel basierend auf einem privaten Schlüssel eines Empfängers und einer senderspezifischen Basis generiert wird. Ein Zwischenschlüssel wird von dem Sender empfangen, wobei der Zwischenschlüssel von dem Sender basierend auf der senderspezifischen Basis und einem Geheimnis des Senders generiert wird. Basierend auf dem Zwischenschlüssel und dem privaten Schlüssel wird ein symmetrischer Schlüssel zum Entschlüsseln einer von dem Sender mit dem symmetrischen Schlüssel verschlüsselten Nachricht rekonstruiert, wobei der symmetrische Schlüssel von dem Sender basierend auf dem öffentlichen Schlüssel und dem Geheimnis des Senders generiert wird.

Erfindungsgemäß ist somit vorgesehen, dass der Empfänger oder eine Empfänger-Rechenvorrichtung nur einen privaten Schlüssel benötigt, um den öffentlichen Schlüssel für den Sender zu erzeugen, der für den Sender spezifisch ist und somit einen pseudonymen Schlüssel darstellt. Der öffentliche Schlüssel wird basierend auf dem privaten Schlüssel und der senderspezifischen Basis generiert, wobei die senderspezifische Basis sowohl dem Empfänger als auch dem Sender bekannt sein muss und einen Teil des pseudonymen Schlüssels bilden kann. Die senderspezifische Basis ist jedoch nur für eine Kommunikation zwischen dem Empfänger und dem Sender spezifisch, so dass trotz eines gleichbleibenden privaten Schlüssels sowohl die senderspezifische Basis als auch der öffentliche Schlüssel für unterschiedliche Sender unterschiedlich sein können, wodurch die Pseudonymität gewahrt bleibt.

Der jeweilige Sender oder eine Sender-Rechenvorrichtung kann die senderspezifische Basis und/oder den vom Empfänger bereitgestellten öffentlichen Schlüssel sowohl für eine aktuelle als auch eine zukünftige Verschlüsselung von Nachrichten für den Empfänger verwenden. Hierzu verwendet der Sender die senderspezifische Basis und den öffentlichen Schlüssel jeweils in Verbindung mit einem Geheimnis, beispielsweise eine Zufallszahl oder ein pseudozufällig generierter Zahlenwert, wobei der Sender einerseits aus dem öffentlichen Schlüssel und dem Geheimnis den symmetrischen Schlüssel ableiten kann und andererseits mittels der senderspezifischen Basis das Geheimnis in dem Zwischenschlüssel in einer nicht rückverfolgbaren oder nicht rückrechenbaren Weise derart verschlüsselt, dass nur durch eine Kombination des Zwischenschlüssels mit dem privaten Schlüssel der symmetrische Schlüssel rekonstruiert werden kann.

Vorzugsweise wird für jeden weiteren Sender jeweils ein weiterer öffentlicher Schlüssel bereitgestellt, der basierend auf dem privaten Schlüssel und einer weiteren senderspezifischen Basis generiert wird. Erfindungsgemäß ist somit vorgesehen, dass mit dem bestehenden privaten Schlüssel beliebig viele unterschiedliche öffentliche Schlüssel für jeweilige Sender erzeugt werden können. Hierbei bleibt jedoch trotz des gleichbleibenden privaten Schlüssels die Pseudonymität des Empfängers gewahrt, da die jeweiligen Sender aus ihren jeweils unterschiedlichen senderspezifischen öffentlichen Schlüsseln nicht durch Vergleich ableiten können, dass sie Nachrichten zum gleichen Empfänger senden.

Vorteilhafterweise kann der Empfänger lediglich den privaten Schlüssel über einen längeren Zeitraum in einem abgesicherten Speicher speichern, da für nachfolgende Rekonstruktionen von symmetrischen Schlüssels aus beliebigen Zwischenschlüsseln beliebiger Sender zur Entschlüsselung der entsprechenden verschlüsselten Nachricht nur der private Schlüssel benötigt wird. Sobald der für einen Sender spezifische öffentliche Schlüssel basierend auf der senderspezifischen Basis und dem privaten Schlüssel generiert und an den Sender übermittelt ist, müssen weder der öffentliche Schlüssel noch die senderspezifische Basis weiter gespeichert werden. Insbesondere muss kein weiterer Abgleich der öffentlichen Schlüssel oder der senderspezifischen Basen erfolgen, da jede Manipulation entweder des öffentlichen Schlüssels oder der senderspezifischen Basis unmittelbar dazu führen würde, dass der Empfänger die Nachricht von dem Sender nicht korrekt entschlüsseln kann. In diesem Fall können entsprechende Sicherheitsmaßnahmen, beispielsweise eine Überprüfung der Kommunikation, Authentisierung des Senders usw., ergriffen werden. Alternativ kann der Empfänger die senderspezifische Basis neu erzeugen oder erneut anfordern und einen neuen öffentlichen Schlüssel erzeugen. Entsprechend können somit besonders vorteilhaft die Speicherressourcen auf die Speicherung lediglich des privaten Schlüssels ausgelegt sein, obwohl für jeden potentiellen Sender ein individueller öffentlicher Schlüssel als pseudonymer Schlüssel generiert und verwendet werden kann.

In einer bevorzugten Ausführungsform wird die senderspezifische Basis von einem vertrauenswürdigen Dritten empfangen. Der vertrauenswürdige Dritte kann eine beliebige Instanz sein, der die Kommunikationsparteien vertrauen, welche auch als Trusted Third Party (TTP) bezeichnet werden kann und beispielsweise bei der elektronischen Kommunikation die jeweilige (pseudonyme) Identität der Kommunikationspartner bescheinigen und weitere Funktionen übernehmen kann, beispielsweise ein Trust Center oder ein Zertifizierungsdienstanbieter oder -instanz (CA), wie z.B. eine Berechtigungs-CA. Der vertrauenswürdige Dritte kann jeweils eine senderspezifische Basis generieren, welche für den Sender oder für die Kommunikation zwischen dem Sender und Empfänger spezifisch ist. Der vertrauenswürdige Dritte kann die senderspezifische Basis an den Sender, an den Empfänger oder sowohl an den Empfänger als auch an den Sender übermitteln, wobei in diesem letztgenannten Fall keine Übertragung der senderspezifischen Basis zwischen Empfänger und Sender beispielsweise zusammen mit dem öffentlichen Schlüssel erfolgen muss. Die Übertragung kann jedoch trotzdem erfolgen, wodurch redundant überprüft werden kann, dass sowohl Sender als auch Empfänger dieselbe senderspezifische Basis für die Kommunikation verwenden. Der vertrauenswürdige Dritte kann die senderspezifische Basis auch lediglich dem Empfänger zur Verfügung stellen, der dann den öffentlichen Schlüssel generiert und sowohl den öffentlichen Schlüssel als auch die senderspezifische Basis an den Sender übermittelt. Ferner kann der vertrauenswürdige Dritte die senderspezifische Basis auch lediglich dem Sender zur Verfügung stellen, wobei der Empfänger vor der Generierung des öffentlichen Schlüssels beim Empfänger die senderspezifische Basis anfordern kann.

Gemäß einer weiteren bevorzugten Ausführungsform umfasst das Verfahren ein Generieren eines Zahlenwerts für den Sender und Berechnen der senderspezifischen Basis basierend auf einem Generator einer kryptographisch sicheren Gruppe und dem Zahlenwert. Vorzugsweise erfolgt die Berechnung der senderspezifischen Basis und alle weiteren kryptographischen Operationen in einer multiplikativ oder additiv geschriebenen, kryptographisch sicheren Gruppe G mit einem Generator $g$, auf der eine Einwegoperation angegeben werden kann, deren Inverse schwierig zu berechnen ist, beispielsweise eine Potenz, wobei die Berechnung des diskreten Logarithmus schwierig sein kann. Vorzugsweise kann zur Berechnung der senderspezifischen Basis ein Generator $g$ einer festgelegten Gruppe G bestimmt werden, auf der die Berechnung des diskreten Logarithmus schwierig. Die senderspezifische Basis kann als $B_x = g^x$ berechnet werden, wobei $x$ ein beliebiger Zahlenwert sein kann, beispielsweise eine Zufallszahl oder ein pseudozufällig generierter Zahlenwert. Die Berechnung der senderspezifischen Basis kann von dem vertrauenswürdigen Dritten und/oder von dem Empfänger ausgeführt werden. Hierbei sollte sichergestellt sein, dass $x$ dem jeweiligen Sender nicht bekannt ist.

Die Gruppe G kann eine beliebige Gruppe sein, beispielsweise eine beliebige zyklische Gruppe, vorzugsweise ein Restklassenkörper

$$\mathbb{Z}_p^*$$

modulo einer Primzahl $p$, oder eine Gruppe von Punkten auf einer elliptischen Kurve über einem endlichen Körper. Ferner kann die Gruppe G eine multiplikative Gruppe

$$\mathbb{F}_{2^m}^*$$

des endlichen Körpers

$$\mathbb{F}_{2^m}$$

mit Charakteristik 2, eine multiplikative Gruppe

$$\mathbb{F}_q^*$$

des endlichen Körpers

$$\mathbb{F}_q,$$

wobei $q = p^m$ und $p$ eine Primzahl ist, und weitere sein.

In einer weiteren Ausführungsform wird der Zahlenwert $x$ für den Sender pseudozufällig zumindest teilweise aus Identitätsdaten des Empfängers generiert. Die Identitätsdaten können zusammen mit dem privaten Schlüssel gespeichert sein, wobei der Empfänger gezielt den Zugriff auf die jeweiligen Identitätsdaten freigeben kann. Der Empfänger kann ein Datum oder mehrere Daten der Identitätsdaten, beispielsweise einen Namen, Geburtsdatum, eine Adresse und weiteren Daten oder ihre Kombinationen, auswählen und mit diesen Daten einen Zufallszahlengenerator initialisieren, um den Zahlenwert x zu generieren. Die Identitätsdaten können ferner mit weiteren Daten, beispielsweise kommunikationsspezifischen Daten oder senderbezogenen Daten kombiniert sein, wie zum Beispiel eine Kombination eines Namens und/oder einer Adresse einer Webseite des Senders/Empfängers und weitere. Darüber hinaus können die Daten pseudozufällig ausgewählt werden.

In einer weiteren Ausführungsform kann der Empfänger die senderspezifische Basis von dem Sender empfangen. Beispielsweise kann der Sender die senderspezifische Basis bereits vorab von dem vertrauenswürdigen Dritten erhalten und sie bei der Initiierung der Kommunikation mit dem Empfänger an den Empfänger weiterleiten. Der Sender kann ferner die senderspezifische Basis zumindest teilweise oder vollständig generieren, wobei sichergestellt sein muss, dass die zur Generierung der senderspezifischen Basis verwendeten Eingabeparameter nach der Erzeugung der senderspezifischen Basis zerstört oder zumindest dem Sender nicht mehr zur Verfügung stehen. So muss beispielsweise sichergestellt sein, dass der Zahlenwert x zur Erzeugung der senderspezifischen Basis $B_x = g^x$ dem Sender nicht bekannt ist. Andernfalls könnte der Sender bei der nachfolgenden Kommunikation seinen anteiligen Wert $x$ aus der senderspezifischen Basis herausrechnen, so dass wiederum mehrere Sender auf der Grundlage der um den jeweiligen Senderanteil bereinigten Basen Rückschlüsse auf die Identität des Empfänger schließen könnten. So kann $g$ öffentlich sein und global für alle Teilnehmer gleich sein. Würde ein Sender S seinen Zahlenwert x kennen und ein weiterer Sender S' seinen Zahlenwert $x'$ kennen, so könnten beide Sender aus dem jeweils senderspezifisch bereitgestellten öffentlichen Schlüssel $K_x = B_x^k = g^{x \cdot k}$ bzw. $K_{x'} = B_{x'}^k = g^{x' \cdot k}$ jeweils $g^k = K_x^{1/x} = K_{x'}^{1/x'}$ berechnen, wodurch sie durch einen Vergleich feststellen könnten, dass die ansonsten unterschiedlichen öffentlichen Schlüssel $K_{x'}$ und $K_x$ aufgrund des identischen Werts $g^k$ demselben Empfänger zugeordnet sind.

Gemäß einer bevorzugten Ausführungsform wird der öffentliche Schlüssel aus einer Verknüpfung des privaten Schlüssels und der senderspezifischen Basis mit einer Funktion generiert, welche eine Einwegfunktion ist, wobei der symmetrische Schlüssel basierend auf einer Verknüpfung des Zwischenschlüssels und des privaten Schlüssels mit der Funktion rekonstruiert wird. Vorzugsweise ist die Einwegfunktion eine Potenz auf der kryptographisch sicheren Gruppe G, in der die Berechnung des diskreten Logarithmus schwierig oder nicht rückrechenbar ist. Entsprechend kann durch die Potenzierung des privaten Schlüssels auf der senderspezifischen Basis der private Schlüssel aus dem öffentlichen Schlüssel nicht oder nur unter derart berechnungsintensiven und zeitintensiven Bedingungen, beispielsweise mehrere Jahre, rekonstruiert werden, dass er kryptographisch nicht mehr sicherheitsrelevant ist. Obwohl die Potenz als ein bevorzugtes Beispiel einer kryptographisch sicheren Einwegfunktion oder Operation auf der Gruppe G angegeben ist, sollte verständlich sein, dass jede beliebige Einwegfunktion auf einer entsprechenden Gruppe verwendet werden kann, welche vorzugsweise einfach und schnell berechnet werden kann.

In einer Ausführungsform wird der öffentliche Schlüssel als $K_x = B_x^k$, der Zwischenschlüssel als $C_x = B_x^y$, der symmetrische Schlüssel wird mittels eines Schlüsselgenerators oder einer Schlüsselableitfunktion basierend auf $Z_S = K_x^y$ generiert und mittels des Schlüsselgenerators oder der Schlüsselableitfunktion basierend auf $Z_E = C_x^k$ rekonstruiert, wobei $B_x$ die senderspezifische Basis, $k$ der private Schlüssel des Empfängers und $y$ das Geheimnis des Senders sind.

In einer weiteren bevorzugten Ausführungsform wird ferner die Integrität der verschlüsselten Nachricht überprüft. Vorzugsweise erfolgt dies durch ein Verifizieren eines von dem Sender mittels einer Funktion zur Erzeugung eines Message Authentication Codes (MAC-Funktion) erzeugten Message Authentication Codes (MAC), der für die Integritätssicherung der Nachricht mittels MAC erzeugt und genutzt werden kann. Der MAC kann sowohl zu der verschlüsselten Nachricht generiert, als auch zu der Nachricht im Klartext generiert werden. Ferner kann der MAC separat zu der verschlüsselten Nachricht oder als Bestandteil der Nachricht, beispielsweise in der verschlüsselten Nachricht selbst, oder mit dieser übertragen werden. Der MAC kann aus einem sowohl dem Sender als auch dem Empfänger bekannten geheimen Schlüssel sowie einer Blockchiffre oder einer Hash-Funktion oder einer anderen Funktion abgeleitet werden, welche den Nachrichteninhalt als Eingabe verwendet und daraus den MAC generiert. Der zur Berechnung des MAC verwendete geheime Schlüssel kann in Zusammenhang mit der Generierung und Übertragung des öffentlichen Schlüssels vereinbart werden oder zu einem beliebigen späteren Zeitpunkt vor Übertragung der verschlüsselten Nachricht. Der Sender kann für den geheimen Schlüssel und seine Nachricht einen MAC berechnen und diesen zusammen mit der Nachricht an den Empfänger senden. Der Empfänger kann den MAC verifizieren, indem er mit dem geheimen Schlüssel ebenfalls den MAC zu der empfangenen Nachricht berechnet und sowohl den empfangenen MAC als auch den berechneten MAC vergleicht, wobei eine Übereinstimmung beider Werte durch den Empfänger als erfolgreicher Integritätstest interpretiert werden kann.

In einer weiteren bevorzugten Ausführungsform wird der öffentliche Schlüssel zwischen Empfänger und Sender bilateral ausgetauscht. Beispielsweise kann der öffentliche Schlüssel über einen Kommunikationskanal vom Empfänger zum Sender übertragen werden. Anschließend können der Sender und/oder der Empfänger über einen separaten Übertragungskanal die Validität des übertragenen öffentlichen Schlüssels und beispielsweise auch die pseudonyme Identität des Empfängers verifizieren. Ein bilateraler Austausch kann über einen Fingerprint erfolgen, beispielsweise über eine SMS oder über das Telefon. Beispielsweis könnte der öffentliche Schlüssel vom Empfänger zum Sender über eine Internet-basierte Verbindung übertragen werden, woraufhin der Sender dem Empfänger über ein weiteres Netzwerk eine Nachricht mit Daten schicken kann, welche zur nachfolgenden Verifikation und/oder Bestätigung durch den Empfänger genutzt werden können, beispielsweise eine Kurznachricht über ein mobiles Netzwerk.

Gemäß einer Ausführungsform wird der öffentliche Schlüssel an den Sender über einen authentisierten und/oder integritätsgesicherten Kanal übertragen. Beispielsweise kann dies mittels eines passwortauthentisierten Verbindungsaufbaus beispielsweise mittels Password Authenticated Connection Establishment (PACE)-Verfahrens oder mittels einer Chip-Authentisierung erfolgen, wie es beispielsweise in der technischen Richtlinie BSI TR-03110 beschrieben ist. Es sind jedoch beliebige weitere Verfahren zum Aufbau eines sicheren Kanals möglich.

In einer besonders bevorzugten Ausführungsform wird der öffentliche Schlüssel ferner mit einer pseudonymen Signatur signiert. Eine pseudonyme Signatur kann generiert werden, indem der Empfänger eine Identität $R$ des Senders von dem Sender empfängt. Der Empfänger kann hierbei Mitglied einer Empfängergruppe sein, wobei jedem Mitglied ein gleicher öffentlicher statischer Gruppenschlüssel $y$ und ein eigener privater statischer Schlüssel $(x_1, x_2)$ zugeordnet sein kann. Der Empfänger kann sowohl zumindest teilweise aus seinem eigenen privaten Schlüssel $(x_1, x_2)$ und der Identität $R$ des Senders mindestens ein Pseudonym $I_R$ generieren, um eine zugehörige pseudonyme Signatur $(I_R, c, s_x, s_2)$ zu berechnen und an den Sender zu übermitteln. Der Sender kann die pseudonyme Signatur $(I_R, c, s_1, s_2)$ des Empfängers anhand des öffentlichen Gruppenschlüssels $y$ des Empfängers und seiner eigenen Identität $R$ überprüfen. Das Pseudonym $I_R$ wird somit überprüfbar aus dem gleichen privaten Schlüssel $(x_1, x_2)$ erstellt, wie die pseudonyme Signatur $(I_R, c, s_1, s_2)$, so dass Pseudonym und Signatur untrennbar miteinander verbunden sind. Entsprechend ist die Signaturprüfung nur dann erfolgreich, wenn das Pseudonym korrekt erzeugt wurde.

Die pseudonyme Signatur $(I_R, c, s_1, s_2)$ kann beispielsweise ausgehend von einer Okamoto-Schnorr-Signatur erstellt sein. Vorzugsweise kann das Pseudonym als $I_R = R^{x_1}$ berechnet werden. Der Empfänger berechnet eine Signatur mit dem Pseudonym, was durch einen simultanen Beweis der Kenntnis des eigenen, privaten Schlüssels $(x_1, x_2)$, der zu den Werten $s_1$ und $s_2$ führt, und eines Hash-Werts $c$ erfolgen kann, der zumindest teilweise aus der Identität $R$ des Senders und der zu signierenden Nachricht generiert werden kann.

Darüber hinaus kann sich der Sender gegenüber dem Empfänger mittels eines von einer dritten Stelle, beispielsweise dem vertrauenswürdigen Dritten, bescheinigten Berechtigungszertifikats, das die Identität $R$ des Empfängers enthält, authentisieren. Der Empfänger kann die Authentisierung und das Berechtigungszertifikat überprüfen und aus dem Berechtigungszertifikat die Identität $R$ des Senders extrahieren. Durch die pseudonyme Signatur kann der Sender somit verifizieren, dass der öffentliche Schlüssel von dem Empfänger stammt, wobei dieser unter einem Pseudonym auftritt, so dass trotz der pseudonymen Signatur auch durch eine Abstimmung unter mehreren Sendern nicht auf die Identität des Empfängers zurückgeschlossen werden kann.

Vorzugsweise können sämtliche gültige Pseudonyme $I_R$ eines Empfängers einer Gruppe mit Pseudonym-Einträgen in einer Positivliste (White List) oder einer Negativliste (Black List) verglichen werden, um zu überprüfen, ob der Empfänger berechtigt ist, eine elektronische pseudonyme Signatur unter Verwendung seines privaten statischen Schlüssels und des öffentlichen statischen Gruppenschlüssels zu erstellen.

Gemäß einem weiteren Aspekt der vorliegenden Erfindung ist ein Verfahren zum Verwenden von pseudonymen Schlüsseln in einem hybriden Verschlüsselungsverfahren angegeben, das ein Empfangen eines öffentlichen Schlüssels von einem Empfänger an einem Sender umfasst, wobei der öffentliche Schlüssel von dem Empfänger für den Sender basierend auf einem privaten Schlüssel des Empfängers und einer Basis generiert wird, die für eine Kommunikation zwischen dem Empfänger und dem Sender spezifisch ist. Ferner wird ein symmetrischer Schlüssel basierend auf dem öffentlichen Schlüssel und einem Geheimnis generiert, ein Zwischenschlüssel basierend auf der Basis und dem Geheimnis generiert und eine Nachricht mit dem symmetrischen Schlüssel verschlüsselt. Der Zwischenschlüssel und die verschlüsselte Nachricht werden an den Empfänger gesendet, wobei der symmetrische Schlüssel von dem Empfänger basierend auf dem Zwischenschlüssel und dem privaten Schlüssel des Empfängers zum Entschlüsseln der verschlüsselten Nachricht rekonstruierbar ist.

Die Basis, die für die Kommunikation zwischen dem Empfänger und dem Sender spezifisch ist, kann in weiteren Ausführungsformen ebenfalls als eine spezifische Basis oder eine senderspezifische Basis definiert sein. Der jeweilige Begriff bezieht sich hierbei auf den Blickwinkel entweder des Senders, des Empfängers oder der Kommunikation zwischen dem Empfänger und dem Sender, um die Spezifizität und die Eindeutigkeit der spezifischen Basis klar zu charakterisieren. Beispielsweise ist aus Sicht des Empfängers die Basis eine senderspezifische Basis, da diese aus Sicht des Empfängers jedem einzelnen Sender spezifisch zugeordnet ist. Aus Sicht des Senders kann jedoch auch jedem Empfänger eine spezifische Basis derart zugeordnet sein, dass diese für die Kommunikation zwischen dem Sender und dem jeweiligen Empfänger spezifisch ist. Wenn einem Sender mehrere spezifische Basen zugeordnet sind, kann dies logisch und kryptographisch derart gesehen werden, als wenn mehrere verschiedene Sender kommunizieren würden, die beispielsweise zufällig vom gleichen Betreiber betrieben werden. Vorzugsweise ist jedoch jedem Sender eine senderspezifische Basis zugeordnet, welche dann für die Kommunikation mit jedem weiteren Empfänger in Verbindung mit dem jeweiligen pseudonymen öffentlichen Schlüssel des Empfängers verwendet werden kann. Die Begriffe spezifische Basis, senderspezifische Basis und Basis, die für eine Kommunikation zwischen dem Empfänger und dem Sender spezifisch ist, sind somit in Verbindung mit der jeweiligen Sichtweise zu verstehen und können untereinander austauschbar sein. Aus einem temporären Blickwinkel betrachtet kann die spezifische Basis ebenfalls eine ephemerale Basis sein, da sie zeitlich für die Dauer einer Kommunikation zwischen dem Empfänger und dem Sender gültig ist, wobei diese Dauer nicht notwendigerweise auf eine einzelne Sitzung oder Session beschränkt sein muss und für beliebige zukünftige Sitzungen gültig sein kann. Eine ephemerale Basis kann jedoch auch lediglich auf eine Sitzung beschränkt sein.

Vorzugsweise stellt der Empfänger einem weiteren Sender einen weiteren öffentlichen Schlüssel bereit, der basierend auf dem privaten Schlüssel des Empfängers und einer weiteren Basis generiert wird, die für eine Kommunikation zwischen dem Empfänger und dem weiteren Sender spezifisch ist.

Da sowohl der öffentliche Schlüssel als auch die Basis für die Kommunikation zwischen dem Empfänger und dem Sender spezifisch sind, kann der Sender auch durch einen Abgleich der öffentlichen Schlüssel mit einem weiteren Sender nicht feststellen, dass sie mit demselben Empfänger kommunizieren, wenn der Empfänger den Sendern gegenüber mit unterschiedlichen Pseudonymen auftritt und die jeweiligen öffentlichen Schlüssel erfindungsgemäß pseudonym gestaltet.

In einer bevorzugten Ausführungsform werden die Basis und/oder die weitere Basis gespeichert und die Basis und/oder die weitere Basis werden für eine zukünftige Kommunikation mit dem Empfänger bzw. mit dem weiteren Empfänger abgerufen. Beispielsweise kann der Sender zu jedem Empfänger oder seinem entsprechenden Pseudonym ein Kundenkonto oder einen entsprechenden Datensatz pflegen und in diesem das Pseudonym, den pseudonymen öffentlichen Schlüssel und die Basis, die für die Kommunikation zwischen dem Sender und dem Empfänger spezifisch ist, oder eine Kombination davon speichern. Der Sender kann jede weitere Nachricht an den Empfänger mit dem einmal erzeugten symmetrischen Schlüssel verschlüsseln und zusammen mit dem Zwischenschlüssel an den Empfänger übertragen, der dann den symmetrischen Schlüssel rekonstruieren und die Nachricht entschlüsseln kann. Entsprechend müssen bei einer erneuten Kommunikation mit dem Empfänger nicht mehr der öffentliche Schlüssel und die spezifische Basis angefordert werden, da diese für die nachfolgende Kommunikation gleichbleibend sein können. Alternativ kann der Sender einen neuen öffentlichen Schlüssel von dem Empfänger anfordern, der diesen auf der Grundlage der spezifischen Basis generieren und dem Sender neu zur Verfügung stellen kann.

Gemäß einer bevorzugten Ausführungsform wird die Basis von einem vertrauenswürdigen Dritten und/oder von dem Empfänger empfangen. Der vertrauenswürdige Dritte kann zu einem Pseudonym des Empfängers die Basis generieren, die für die Kommunikation zwischen dem Empfänger und dem Sender spezifisch ist, und diese direkt an den Sender übermitteln. Zusätzlich oder alternativ kann der vertrauenswürdige Dritte die spezifische Basis an den Empfänger übermitteln, der sie nach der Generierung des öffentlichen Schlüssels zusammen mit dem öffentlichen Schlüssel an den Sender übertragen kann. Die spezifische Basis kann auch alternativ von dem Empfänger generiert und an den Sender übertragen werden. Zwar kann die Basis ebenfalls senderseitig generiert werden, jedoch muss hierbei durch geeignete Maßnahmen sichergestellt sein, dass die zur Generierung der spezifischen Basis erforderlichen Eingaben nach der Generierung dem Sender nicht mehr zur Verfügung stehen, damit gewährleistet sein kann, dass der Sender die spezifische Basis nicht um seinen Senderanteil bereinigen kann und so letztendlich ein die Pseudonymität gefährdender Abgleich unter mehreren Sendern möglich ist.

Gemäß einer weiteren bevorzugten Ausführungsform wird der symmetrische Schlüssel aus einer Verknüpfung des öffentlichen Schlüssels und des Geheimnisses mit einer Funktion generiert, welche eine Einwegfunktion, insbesondere eine Potenz auf einer kryptographisch sicheren Gruppe ist, wobei der Zwischenschlüssel aus einer Verknüpfung der Basis und des Geheimnisses mit der Funktion generiert wird. Die von dem Sender und dem Empfänger verwendete kryptographisch sichere Gruppe kann hierbei identisch sein, um die empfängerseitige Rekonstruktion des symmetrischen Schlüssels zur Entschlüsselung der Nachricht zu ermöglichen.

Gemäß einer weiteren Ausführungsform wird ferner ein MAC zum Überprüfen der Integrität der verschlüsselten Nachricht durch den Empfänger erzeugt.

In einer weiteren Ausführungsform wird ferner der öffentliche Schlüssel über einen authentisierten und/oder integritätssicheren Kanal empfangen.

In einer bevorzugten Ausführungsform wird eine pseudonyme Signatur des öffentlichen Schlüssels vorzugsweise durch den Empfänger verifiziert.

Gemäß einem weiteren Aspekt der vorliegenden Erfindung wird ein hybrides Verschlüsselungsverfahren mit pseudonymen Schlüsseln zum Verschlüsseln von Nachrichten zwischen einer Vielzahl von Sendern und einem Empfänger bereitgestellt, das ein Speichern eines privaten Schlüssels des Empfängers durch den Empfänger, Bereitstellen jeweils eines öffentlichen Schlüssels für jeden Sender aus der Vielzahl von Sendern durch den Empfänger, wobei jeder öffentliche Schlüssel von dem Empfänger basierend auf dem privaten Schlüssel des Empfängers und einer jeweils anderen senderspezifischen Basis generiert wird, Generieren eines symmetrischen Schlüssels durch einen Sender aus der Vielzahl von Sendern basierend auf dem entsprechenden öffentlichen Schlüssel und einem Geheimnis, Generieren eines Zwischenschlüssels durch den Sender basierend auf der entsprechenden senderspezifischen Basis und dem Geheimnis, Verschlüsseln einer Nachricht mit dem symmetrischen Schlüssel, Übertragen des Zwischenschlüssels und der verschlüsselten Nachricht zwischen dem Sender und dem Empfänger, und Rekonstruieren des symmetrischen Schlüssels durch den Empfänger basierend auf dem Zwischenschlüssel und dem privaten Schlüssel zum Entschlüsseln der verschlüsselten Nachricht umfasst. Vorzugsweise wird für jeden weiteren Sender jeweils ein weiterer öffentlicher Schlüssel bereitgestellt, der basierend auf dem privaten Schlüssel und einer weiteren senderspezifischen Basis generiert wird.

In einer bevorzugten Ausführungsform wird ferner ein weiterer symmetrischer Schlüssel durch einen weiteren Sender aus der Vielzahl von Sendern basierend auf dem entsprechenden öffentlichen Schlüssel und einem weiteren Geheimnis generiert, ein weiterer Zwischenschlüssel durch den weiteren Sender basierend auf der entsprechenden senderspezifischen Basis und dem weiteren Geheimnis generiert, eine weitere Nachricht mit dem weiteren symmetrischen Schlüssel verschlüsselt, und der weitere Zwischenschlüssel und die weitere verschlüsselte Nachricht zwischen dem weiteren Sender und dem Empfänger übertragen. Der Empfänger kann den weiteren symmetrischen Schlüssel basierend auf dem weiteren Zwischenschlüssel und dem privaten Schlüssel rekonstruieren und diesen zur Entschlüsselung der weiteren verschlüsselten Nachricht verwenden. Nach der Verteilung der öffentlichen Schlüssel an die jeweiligen Sender ist somit die Entschlüsselung der jeweiligen Nachrichten der Sender von den öffentlichen Schlüsseln und/oder den senderspezifischen Basen entkoppelt und es reicht die Kenntnis des privaten Schlüssels zur Entschlüsselung der Nachrichten. Entsprechend kann der Empfänger zur Entschlüsselung der Nachrichten von allen Sendern lediglich seinen privaten Schlüssel speichern.

Das erfindungsgemäße Verfahren bietet somit einen schnellen und speicherschonenden Ansatz, der eine pseudonyme Verschlüsselung von Nachrichten zwischen einer Vielzahl von Sendern und einem Empfänger erlaubt, ohne dass es den Sendern möglich wäre, durch einen Abgleich untereinander Rückschlüsse auf die Identität des Empfängers zu ziehen und so die Pseudonymität des Empfängers zu kompromittieren und gegebenenfalls ein Persönlichkeitsprofil oder persönlichkeitsbezogene Daten zu vervollständigen.

In einer bevorzugten Ausführungsform ist jede senderspezifische Basis eine ephemerale Basis für die Kommunikation zwischen dem Empfänger und dem jeweiligen Sender.

Gemäß einer weiteren Ausführungsform werden die senderspezifischen Basen durch einen oder mehrere aus einem vertrauenswürdigen Dritten, dem Empfänger und dem jeweiligen Sender bereitgestellt. Vorzugsweise erfolgt die Bereitstellung durch den vertrauenswürdigen Dritten.

In einer Ausführungsform werden die öffentlichen Schlüssel zwischen dem Empfänger und dem jeweiligen Sender bilateral ausgetauscht.

Gemäß einer bevorzugten Ausführungsform wird ein authentisierter und/oder integritätsgesicherter Kanal zwischen dem Empfänger und einem Sender aus der Vielzahl von Sendern aufgebaut und der entsprechende öffentliche Schlüssel wird über den authentisierten und/oder integritätsgesicherten Kanal zwischen dem Empfänger und dem Sender übertragen. Je nach Anforderungsprofil, kann somit ein gesicherter Kanal zwischen dem Empfänger und einer Teilmenge der Sender aufgebaut sein, beispielsweise um eine besonders gesicherte Kommunikation zu Sendern herzustellen, die ein höheres Sicherheitsniveau erfordern.

Erfindungsgemäß ist ferner eine Vorrichtung zum Bereitstellen von pseudonymen Schlüsseln für ein hybrides Verschlüsselungsverfahren definiert, die einen Speicher, der eingerichtet ist, einen privaten Schlüssel zu speichern, eine Schnittstelle, die eingerichtet ist, einen öffentlichen Schlüssel für einen Sender bereitzustellen und einen Zwischenschlüssel von dem Sender zu empfangen, und eine Verarbeitungseinheit umfasst, die an dem Speicher und an die Schnittstelle gekoppelt ist. Die Verarbeitungseinheit ist eingerichtet, den öffentlichen Schlüssel für den Sender basierend auf dem privaten Schlüssel und einer senderspezifischen Basis zu generieren und einen symmetrischen Schlüssel basierend auf dem Zwischenschlüssel und dem privaten Schlüssel zum Entschlüsseln einer mit dem symmetrischen Schlüssel verschlüsselten Nachricht zu rekonstruieren, wobei der Zwischenschlüssel von dem Sender basierend auf der senderspezifischen Basis und einem Geheimnis des Senders generiert ist und der symmetrische Schlüssel von dem Sender basierend auf dem öffentlichen Schlüssel und dem Geheimnis des Senders generiert ist. Vorzugsweise ist die Verarbeitungseinheit eingerichtet, für jeden weiteren Sender jeweils einen weiteren öffentlichen Schlüssel basierend auf dem privaten Schlüssel und einer weiteren senderspezifischen Basis zu generieren.

Die erfindungsgemäße Vorrichtung eines Empfängers kann somit vorteilhaft pseudonyme Schlüssel für eine beliebige Anzahl von Sendern bereitstellen, wobei in dem Speicher, beispielsweise einem abgesicherten Speicher, lediglich nur der private Schlüssel gespeichert sein kann, der zur Erzeugung der öffentlichen Schlüssel für die jeweiligen Sender verwendet wird. Sowohl der öffentliche Schlüssel als auch die senderspezifische Basis, welche für jeden Sender individuell bestimmt sein kann, können nach der Generierung des öffentlichen Schlüssels verworfen werden oder müssen zumindest nicht im Speicher gespeichert sein. Somit muss der Speicher nur auf die Speicherung des privaten Schlüssels ausgelegt sein. Zwischenwerte und weniger sicherheitsrelevante Daten können in einem anderen Speicher oder in einem anderen Teil des Speichers gespeichert oder zwischengespeichert sein, der nicht oder weniger abgesichert sein muss. Die Vorrichtung erfordert somit keine erhöhten Speicherressourcen. Da die Verarbeitungseinheit primär auf die Generierung des öffentlichen Schlüssels und Rekonstruktion des symmetrischen Schlüssels ausgerichtet ist, kann auch die Wahl der Verarbeitungseinheit entsprechend ressourcenschonend erfolgen, was insgesamt zu einer preisgünstigeren Herstellung der Vorrichtung führen kann.

Die Schnittstelle kann eine Verbindung zu einer externen Datenverarbeitungseinheit aufbauen, beispielsweise indem sie einen Kommunikationskanal oder einen gesicherten Kanal über ein elektronisches Netzwerk zu der externen Datenverarbeitungseinheit aufbauen kann. Die Schnittstelle kann ferner eingerichtet sein, direkt mit einem Lesegerät oder einer dem Empfänger zugeordneten Recheneinheit zu kommunizieren, welche dann die weitere Verbindung zu der externen Datenverarbeitungseinheit aufbauen kann. Hierbei kann das Lesegerät oder die dem Empfänger zugeordnete Recheneinheit die Kommunikation mit der Vorrichtung über die Schnittstelle aktivieren, so dass die Vorrichtung nicht von allein aktiv werden muss, sondern nur als Reaktion auf einen Befehl von der Recheneinheit oder von dem Lesegerät. Auf einer höheren Kommunikationsebene kann die Vorrichtung beispielsweise einen gesicherten Kanal über das Lesegerät und ggf. über die zugeordnete Recheneinheit direkt zu einem der Sender oder zu einem vertrauenswürdigen Dritten aufbauen, obwohl auf einer unteren Kommunikationsebene diese Kommunikation über das Lesegerät und die zugeordnete Recheneinheit erfolgt. Die Verbindung zwischen der Schnittstelle und dem Lesegerät oder der zugeordneten Recheneinheit kann über elektrische Kontakte, kontaktlos über ein Funkverfahren, optisch oder durch beliebige andere Übertragungs- und Verbindungsmöglichkeiten erfolgen.

In einer Ausführungsform ist der in dem Speicher gespeicherte private Schlüssel vor unberechtigter Nutzung geschützt. Beispielsweise kann die Vorrichtung vor einem Zugriff auf den privaten Schlüssel im Speicher die Eingabe von Sicherheitsmerkmalen durch einen Benutzer der Vorrichtung erfordern, beispielsweise eine Eingabe eines Kennworts oder biometrischer Merkmale, eines Fingerabdrucks oder ähnlicher und weiterer Sicherheitsmerkmale.

In einer weiteren Ausführungsform ist die Schnittstelle ferner eingerichtet, den rekonstruierten symmetrischen Schlüssel zur Entschlüsselung der verschlüsselten Nachricht bereitzustellen. Die Verarbeitungseinheit kann somit den symmetrischen Schlüssel basierend auf dem Zwischenschlüssel und dem privaten Schlüssel entschlüsseln und über die Schnittstelle bereitstellen, beispielsweise für die zugeordnete Recheneinheit oder eine andere externe Recheneinheit, welche den symmetrischen Schlüssel verwenden kann, um die verschlüsselte Nachricht zu entschlüsseln.

Gemäß einer weiteren bevorzugten Ausführungsform ist die Verarbeitungseinheit ferner eingerichtet, die verschlüsselte Nachricht mit dem rekonstruierten symmetrischen Schlüssel zu entschlüsseln. Hierbei kann die Schnittstelle eingerichtet sein, neben dem Zwischenschlüssel ferner die verschlüsselte Nachricht zu empfangen und der Verarbeitungseinheit bereitzustellen, welche dann den rekonstruierten symmetrischen Schlüssel verwendet, um die verschlüsselte Nachricht zu entschlüsseln. Ein Vorteil dieser Ausführungsform besteht darin, dass der rekonstruierte symmetrische Schlüssel die Vorrichtung nicht verlässt, so dass hierbei verhindert werden kann, dass der rekonstruierte symmetrische Schlüssel manipuliert oder anderweitig missbraucht werden könnte.

In einer weiteren Ausführungsform ist die Schnittstelle ferner eingerichtet, die senderspezifische Basis von einem vertrauenswürdigen Dritten oder von dem Sender zu empfangen. Die Vorrichtung kann somit von der dem Empfänger zugeordneten Recheneinheit eine Aufforderung über die Schnittstelle erhalten, einen pseudonymen Schlüssel zu generieren, wobei die Anforderungen die senderspezifische Basis enthalten kann, die von einem vertrauenswürdigen Dritten geliefert worden sein könnte. Alternativ oder zusätzlich kann nach Erhalt der Anforderung die Verarbeitungseinheit der Vorrichtung über die Schnittstelle eine Verbindung zu dem vertrauenswürdigen Dritten oder zu dem Sender aufbauen und die senderspezifische Basis anfordern.

In einer weiteren Ausführungsform ist die Verarbeitungseinheit ferner eingerichtet, einen Zahlenwert für den Sender zu erzeugen und die senderspezifische Basis zumindest teilweise basierend auf einem Generator einer kryptographisch gesicherten Gruppe und dem Zahlenwert zu berechnen, wobei die Schnittstelle ferner eingerichtet ist, die senderspezifische Basis an den Sender zu übertragen. Hierbei kann nach dem Empfang einer Anforderung zur Generierung eines pseudonymen Schlüssels die Verarbeitungseinheit selbst die senderspezifische Basis erzeugen und über die Schnittstelle zusammen mit dem öffentlichen Schlüssel für den Sender bereitstellen.

Gemäß einer weiteren Ausführungsform umfasst die Vorrichtung einen Zufallszahlengenerator, der eingerichtet ist, den Zahlenwert für den Sender als eine Zufallszahl oder eine Pseudozufallszahl zu generieren. Vorzugsweise speichert der Speicher ferner Identitätsdaten eines Benutzers der Vorrichtung, wobei die Verarbeitungseinheit eingerichtet ist, den Zahlenwert für den Sender pseudozufällig zumindest teilweise aus den Identitätsdaten zu generieren.

In einer weiteren Ausführungsform sind zumindest der Speicher, die Schnittstelle und die Verarbeitungseinheit auf einer Chipkarte angeordnet.

Gemäß einer weiteren Ausführungsform ist die Vorrichtung ferner an ein Lesegerät gekoppelt, das zur bidirektionalen Kommunikation mit der Chipkarte eingerichtet ist. Das Lesegerät kann eine drahtgebundene oder drahtlose Kommunikation oder Funkkommunikation mit der Chipkarte aufbauen, beispielsweise durch direkten Kontakt der Schnittstelle mit einer entsprechenden Schnittstelle des Lesegeräts oder durch Anordnen der Chipkarte in einem Wirkungsbereich des Lesegeräts, beispielsweise mittels RFID, WLAN oder Bluetooth. Das Lesegerät kann entsprechend die Kommunikation mit der Chipkarte initiieren, sobald sich die Chipkarte im Wirkungsbereich oder in einem unmittelbaren Kontakt mit dem Lesegerät befindet. Nach Initiierung der Kommunikation kann die Chipkarte eine Eingabe von Sicherheitsmerkmalen über das Lesegerät anfordert, beispielsweise die Eingabe eines Passworts, einer PIN oder biometrischer Merkmale durch einen Benutzer oder Inhaber der Chipkarte. Wenn die Sicherheitsmerkmale mit in der Chipkarte gespeicherten Werten übereinstimmen, kann das Lesegerät weitere Funktionen auf der Chipkarte abrufen, beispielsweise eines oder mehrere aus einer Erzeugung eines pseudonymen Schlüssels für eine sichere Kommunikation zwischen der Vorrichtung und einem Sender, einer Rekonstruktion eines symmetrischen Schlüssels aus einem Zwischenschlüssel, einer Entschlüsselung einer verschlüsselten Nachricht und weiteren Funktionen.

In einer besonders bevorzugten Ausführungsform ist die Chipkarte ein elektronischer Personalausweis. Die Chipkarte kann ferner ein beliebiger elektronischer Ausweis oder ein elektronisches hoheitliches Dokument sein, das eine elektronische Identität (eID) zu Verfügung stellen kann, beispielsweise ein Personalausweis, ein Führerschein, ein Ausweis für Bürger der Europäischen Union, ein Dienst- und Mitarbeiterausweis und andere.

Gemäß einem weiteren Aspekt der vorliegenden Erfindung ist ein Sender definiert, der einen Speicher, eine Recheneinheit und eine Kommunikationsschnittstelle umfasst. Der Speicher ist eingerichtet, für einen Empfänger einen öffentlichen Schlüssel und eine Basis zu speichern, wobei der öffentliche Schlüssel von dem Empfänger basierend auf einem privaten Schlüssel des Empfängers und der Basis generiert ist, die für die Kommunikation zwischen dem Empfänger und dem Sender spezifisch ist. Die Recheneinheit ist eingerichtet, einen symmetrischen Schlüssel basierend auf dem öffentlichen Schlüssel und einem Geheimnis zu generieren, einen Zwischenschlüssel basierend auf der Basis und dem Geheimnis zu generieren und eine Nachricht mit dem symmetrischen Schlüssel zu verschlüsseln. Die Kommunikationsschnittstelle ist eingerichtet, den Zwischenschlüssel und die verschlüsselte Nachricht an den Empfänger zu senden, wobei der symmetrische Schlüssel von dem Empfänger basierend auf dem Zwischenschlüssel und dem privaten Schlüssel des Empfängers zum Entschlüsseln der verschlüsselten Nachricht rekonstruierbar ist.

Der Sender kann vorzugsweise eine Datenverarbeitungsanlage oder Rechenvorrichtung eines Dienstanbieters sein, der mit einem Empfänger oder mit einer dem Empfänger zugeordneten Datenverarbeitungs- oder Recheneinheit derart kommunizieren kann, dass dieser Empfänger zwar unter einem Pseudonym dem Dienstanbieter bekannt ist, der Sender jedoch davon ausgehen kann, dass der Empfänger dem Sender gegenüber stets das gleiche Pseudonym verwendet. Dadurch, dass der Empfänger jedoch vorzugsweise für jeden weiteren Sender einen anderen weiteren öffentlichen Schlüssel bereitstellt, der basierend auf dem privaten Schlüssel des Empfängers jedoch auf einer anderen spezifischen Basis generiert wird, die für eine Kommunikation zwischen dem Empfänger und dem weiteren Sender spezifisch ist, kann der Sender auch durch einen Vergleich des öffentlichen Schlüssels mit einem weiteren Sender nicht Rückschlüsse darauf ziehen, dass die Kommunikation beider Sender mit demselben Empfänger erfolgt. Hierdurch wird die Pseudonymität des Empfängers gewahrt, die hybride Verschlüsselung durch den Sender jedoch nicht beeinträchtigt. Der Sender kann beispielsweise für jeden Empfänger im Speicher den pseudonymen Schlüssel, die spezifische Basis und/oder das entsprechende Pseudonym des Empfängers speichern, so dass bei jeder erneuten Kommunikation Nachrichten direkt verschlüsselt werden können, ohne dass vom Empfänger ein neuer öffentlicher Schlüssel angefordert werden muss. Hierdurch kann eine besonders schnelle und sichere Verschlüsselung erzielt werden.

Erfindungsgemäß ist ferner ein System mit einem Empfänger und einem oder mehreren Sendern angegeben, wobei der eine oder die mehreren Sender gemäß einer Ausführungsform der vorliegenden Erfindung definiert sind und der Empfänger eine Vorrichtung nach einer der Ausführungsformen der vorliegenden Erfindungen umfasst. Das System kann ferner mindestens ein Kommunikationsnetz umfassen, das eine elektronische Kommunikation zwischen dem Empfänger oder einer dem Empfänger zugeordneten Rechenvorrichtung und dem einen oder den mehreren Sendern oder entsprechenden den Sendern zugeordneten Rechenvorrichtungen ermöglicht. Beispielsweise kann ein beliebiges IP-basiertes Netz, beispielsweise das Internet, zur Kommunikation zwischen dem Empfänger und dem einen oder den mehreren Sendern verwendet werden. Darüber hinaus können auch beliebige drahtlose oder drahtgebundene Netze oder Kombinationen davon in einer beliebigen Topologie und Unterteilung verwendet werden. Der Empfänger oder die zugeordnete Rechenvorrichtung kann beispielsweise eine oder mehrere Kommunikationsschnittstellen zur Kommunikation mit einem oder mehreren der Kommunikationsnetze aufweisen und kann eine Verbindung zu mindestens einem der Sender oder der zugeordneten Rechenvorrichtung über eine der Kommunikationsschnittstellen aufbauen und eine weitere Verbindung zu mindestens einem weiteren Sender oder der zugeordneten Rechenvorrichtung über dieselbe oder eine weitere Kommunikationsschnittstelle aufbauen.

Erfindungsgemäß ist ferner ein computerlesbarer Datenträger definiert, auf dem Befehle gespeichert sind, die, wenn sie auf einer Rechenvorrichtung installiert werden und/oder von dieser ausgeführt werden, dazu führen, dass die Rechenvorrichtung automatisch ein Verfahren nach mindestens einer der Ausführungsformen durchführt.

Es sollte verständlich sein, dass obwohl einige Ausführungsformen hinsichtlich eines Verfahrens oder einer Vorrichtung definiert sind, die jeweiligen Verfahrensmerkmale auch als jeweilige Mittel einer Vorrichtung, beispielsweise einer elektronischen Rechenvorrichtung oder einer Datenverarbeitungsvorrichtung definiert sein können, welche zur Ausführung der jeweiligen Verfahrensschritte eingerichtet sind. Andererseits können einzelne verfahrensbezogene Ausführungsformen zusätzlich ein Bereitstellen der jeweiligen Vorrichtungsmerkmale gemäß anderen Ausführungsformen oder einzelne Verfahrensschritte umfassen, welche auf die Funktionalität der jeweiligen Vorrichtungsmerkmale gerichtet sind. So kann beispielsweise die Verarbeitungseinheit der erfindungsgemäßen Vorrichtung in einer Ausführungsform dazu eingerichtet sein, Verfahrensschritte eines Verfahrens gemäß einer anderen Ausführungsform auszuführen. In einer ähnlichen Art und Weise kann auch die Recheneinheit des erfindungsgemäßen Senders gemäß einer Ausführungsform dazu eingerichtet sein, Verfahrensschritte eines Verfahrens gemäß einer anderen Ausführungsform auszuführen.

Ferner können die einzelnen Verfahrensschritte durch funktionale Einheiten einer elektronischen Rechenvorrichtung oder einer Datenverarbeitungsvorrichtung ausgeführt werden, beispielsweise das Bereitstellen eines öffentlichen Schlüssels, das Empfangen eines Zwischenschlüssels, oder das Rekonstruieren eines symmetrischen Schlüssels durch eine elektronische Verarbeitungseinheit oder Logik einer einem Empfänger zugeordneten Rechenvorrichtung oder einer Datenverarbeitungsvorrichtung. Entsprechend können beispielsweise das Empfangen eines öffentlichen Schlüssels, das Generieren eines symmetrischen Schlüssels, das Generieren und Senden eines Zwischenschlüssels durch eine elektronische Verarbeitungseinheit oder Logik einer einem Sender zugeordneten Rechenvorrichtung oder einer Datenverarbeitungsvorrichtung ausgeführt werden. Die beschriebenen Ausführungsformen können sich ferner zumindest teilweise auf ein kryptographisches Verfahren beziehen, welches zur Verschlüsselung von elektronischen oder digitalen Nachrichten in einer elektronischen oder digitalen Datenkommunikation zwischen einem Empfänger oder einer dem Empfänger zugeordneten Rechenvorrichtung oder Datenverarbeitungsvorrichtung und mindestens einem Sender oder einer dem Sender zugeordneten Rechenvorrichtung oder Datenverarbeitungsvorrichtung zum Einsatz kommt, die über ein elektronisches Kommunikationsnetzwerk erfolgen kann, und beliebigen Kombinationen davon.

Weitere Vorteile der erfindungsgemäßen Verfahren, der Vorrichtung, des Senders und des Systems ergeben sich aus der folgenden Beschreibung, in der die Erfindung anhand von Ausführungsbeispielen unter Bezugnahme auf die beigefügten Zeichnungen näher erläutert wird. Darin zeigen:

Fig. 1     ein Kommunikationssystem, das den Einsatz eines hybriden Verschlüsselungsverfahrens mit pseudonymen Schlüsseln gemäß Ausführungsformen der vorliegenden Erfindung ermöglicht,

Fig. 2     ein Flussdiagramm eines Verfahrens zur Bereitstellung pseudonymer Schlüssel für ein hybrides Verschlüsselungsverfahren gemäß Ausführungsformen der vorliegenden Erfindung und

Fig. 3     ein Flussdiagramm eines Verfahrens zum Verwenden von pseudonymen Schlüsseln in einem hybriden Verschlüsselungsverfahren gemäß Ausführungsformen der vorliegenden Erfindung.

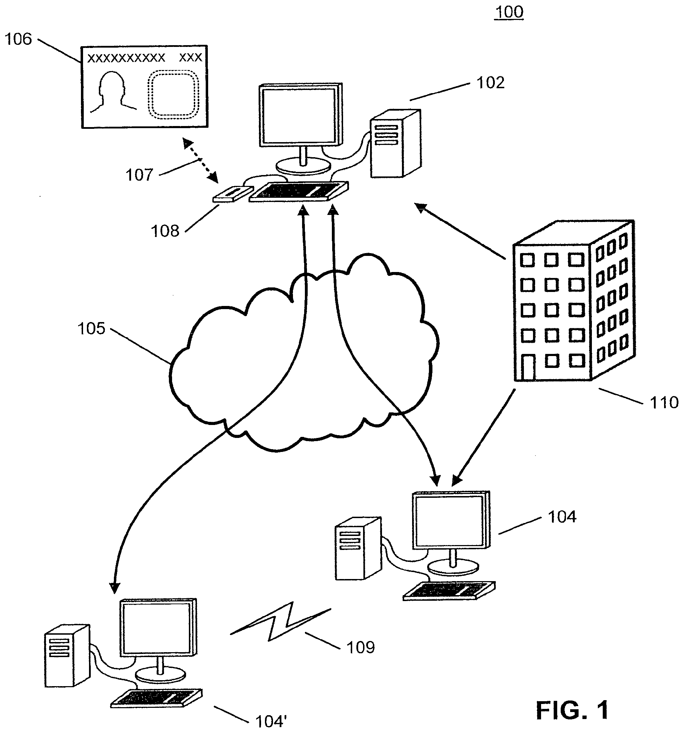

Fig. 1 zeigt eine schematische Ansicht eines Kommunikationssystems 100 gemäß einer Ausführungsform der vorliegenden Erfindung, das den Einsatz eines hybriden Verschlüsselungsverfahrens mit pseudonymen Schlüsseln erlaubt. Das Kommunikationssystem 100 kann eine Datenkommunikation zwischen einem Empfänger 102 bzw. einem zugeordneten Rechner und einem Sender oder Dienstanbieter 104 bzw. einem zugeordneten Rechner oder einem weiteren Dienstanbieter 104' bzw. einem zugeordneten Rechner über ein Kommunikationsnetz 105 vermitteln.

Der Empfänger 102 kann über eine lokale Verbindung 107 auf eine Chipkarte 106 zugreifen, beispielsweise auf einen elektronischen Personalausweis mit eID-Funktion, wobei die lokale Verbindung 107 mit dem Rechner des Empfängers 102 über ein Lesegerät 108 aufgebaut werden kann.

Der Dienstanbieter 104 kann beispielsweise ein Online-Dienstanbieter aus dem Bereich e-Government, e-Finanzservice und/oder e-Business sein, beispielsweise ein Webshop oder eine Behörde. Der Besitzer der Chipkarte 106 kann sich über den Empfänger 102 gegenüber dem Dienstanbieter 104, 104' durch ein Pseudonym identifizieren, welches dem Dienstanbieter 104, 104' die Feststellung ermöglicht, dass er immer mit derselben Person oder Entität kommuniziert, die jedoch dem Dienstanbieter 104, 104' keinerlei Rückschlüsse auf die wahre Identität des Besitzers erlaubt, da der Besitzer und somit der Empfänger 102 gegenüber den jeweiligen Dienstanbietern 104, 104' jeweils unter einem anderen Pseudonym auftreten können. Das Pseudonym kann als eine virtuelle Identität betrachtet werden, bei der davon ausgegangen werden kann, dass derjenige, der mit ihr kommuniziert, immer mit derselben Person, Entität oder Organisation kommuniziert, ein Rückschluss auf die real existierende Person aber nicht möglich sein soll.

Der Empfänger 102 kann gezielt einzelne auf der Chipkarte 106 gespeicherte Identitätsdaten für den Dienstanbieter 104 oder 104' freigeben. Dem Dienstanbieter 104, 104' soll es jedoch nicht möglich sein, ohne die Freigabe durch den Empfänger 102 einzelne oder alle Identitätsdaten aus der Chipkarte 106 auszulesen.

Die Chipkarte 106 kann derart eingerichtet sein, dass eine Datenverbindung mit dem Dienstanbieter 104 über das Netzwerk 105 aufgebaut werden kann, dem selektiv das Auslesen bestimmter Daten aus der Chipkarte 106 gestattet wird. Beispielsweise kann einem Einzelhändler das Auslesen von Identitätsdaten aus der Chipkarte 106 gestattet werden, jedoch nicht beispielsweise das Alter, es sei denn, dass eine Altersbeschränkung gegeben ist. Bei Anwendungen, welche das Auslesen einer kompletten Identität nicht erfordern kann nur auf solche Daten ein Zugriff gestattet werden, die keinen Rückschluss auf die Identität zulassen. Der Empfänger 102 könnte dem Dienstanbieter 104, beispielsweise einem Versandhändler, den Zugriff auf eine Lieferadresse und eine Altersverifikation über die Chipkarte 106 freigeben und dem weiteren Dienstanbieter 104' lediglich den Nachweis über das Erreichen eines bestimmten Alters, beispielsweise die Volljährigkeit, ermöglichen. Da sich bei jedem dieser Dienstanbieter 104, 104' der Empfänger 102 über die Chipkarte 106 unter einem anderen Pseudonym identifizieren kann, ist ein direkter Abgleich 109 zwischen den Dienstanbietern 104, 104' nicht möglich.

Die Chipkarte 106 kann ferner für eine hybride Verschlüsselung der Datenkommunikation zwischen dem Empfänger 102 und den Dienstanbietern 104, 104' jeweils pseudonyme Schlüssel bereitstellen. Wie bereits im Detail erörtert worden ist, werden alle Sicherheitseigenschaften in der gesamten Beschreibung nur auf der Ebene des Datenaustausches zwischen der Chipkarte 106 und den Dienstanbietern 104, 104' und somit auf einer anwendungsbezogenen Ebene der Kommunikation betrachtet. Eine darüber hinausgehende pseudonyme Absicherung der darunter liegenden Schichten, beispielsweise des Transportkanals, sind jedoch durch den erfindungsgemäßen Ansatz nicht ausgeschlossen und können zur weiteren Erhöhung des Sicherheitsniveaus vorgesehen sein.

In einer beispielhaften Ausführungsform bietet die Chipkarte 106 verschiedene Funktionen an, beispielsweise eine Authentisierung des Besitzers oder Empfängers 102, eine Signatur eines Dokumentes oder einer Nachricht, eine Verschlüsselung eines Dokumentes oder einer Nachricht und eine Entschlüsselung eines verschlüsselten Dokumentes oder einer Nachricht.

Bei einer Authentisierung werden jedoch nicht über ein Zertifikat alle dort verbundenen Identitätsdaten zum Authentisierungsnehmer, beispielsweise dem Dienstanbieter 104, 104' übermittelt, sondern nur die von dem Inhaber der Chipkarte 106 ausgewählten Identitätsdaten. Hierbei kann ein mögliches Identitätsdatum ein Pseudonym sein, das ebenfalls als "karten- und dienstanbieterspezifisches Kennzeichen" bezeichnet sein kann, welches ein Merkmal ist, das für jeden Dienstanbieter 104, 104' und für jede Chipkarte 106 unterschiedlich ist, aber für jede Kombination von Dienstanbieter 104 und Chipkarte 106 oder Dienstanbieter 104' und Chipkarte 106 konstant ist. Eine weitere Eigenschaft kann darin bestehen, dass zwei verschiedene Dienstanbieter 104 und 104' kryptographisch nicht erkennen können, ob die jeweiligen Pseudonyme von der gleichen Chipkarte 106 erzeugt werden.

Ein Pseudonym kann aus einem nur auf der Karte gespeicherten geheimen Schlüssel $k$ und einem öffentlichen Schlüssel des Dienstanbieters 104, beispielsweise $B_x = g^x$ als $I_{k,x} = H(B_x^k)$ berechnet sein. Dabei kann $H()$ insbesondere eine Hash-Funktion sein. Weiter darf das jeweilige $x$ keinem der Dienstanbieter 104, 104' bekannt sein, da ansonsten zwei Dienstanbieter 104 und 104' die jeweils erhaltenen Pseudonyme miteinander vergleichen könnten. $x$ kann für jeden Dienstanbieter 104, 104' von dem vertrauenswürdigen Dritten 110 erzeugt sein, der auch Zertifikate für die Dienstanbieter 104, 104' ausstellen kann, welche die Dienstanbieter 104, 104' bei der Authentisierung jeweils an die Chipkarte 106 übermitteln. Dem Dienstanbieter 104 steht somit nur der Wert $B_x$ zur Verfügung, woraus dieser jedoch nicht auf $x$ zurückschließen kann. Das erfindungsgemäße pseudonyme hybride Verschlüsselungsverfahren kann vorzugsweise die pseudonyme Authentisierung über ein Pseudonym $I_{k,x}$ umfassen und mit dieser kombiniert sein. So kann beispielsweise eine senderspezifische Basis, die zur Generierung pseudonymer Schlüssel für den Dienstanbieter 104 verwendet wird, dem öffentlichen Schlüssel $B_x$ des Dienstanbieters 104 entsprechen.

In einer ersten Phase, die ebenfalls als eine Setup-Phase bezeichnet werden kann, kann der Dienstanbieter 104 von dem vertrauenswürdigen Dritten 110 ein $B_x = g^x$ erhalten. Der vertrauenswürdige Dritte 110 erzeugt somit $B_x$ und überträgt dies an den Dienstanbieter 104.

In einer weiteren Phase kann der Empfänger 102, der ebenfalls $B_x$ empfängt, einen pseudonymen öffentlichen Schlüssel als $K_x = B_x^k$ generieren und diesen pseudonym authentisieren, wie es bereits beschrieben worden ist. $B_x$ kann somit sowohl zur Erzeugung des Pseudonyms $I_{k,x}$, als auch des pseudonymen öffentlichen Schlüssels $K_x$ verwendet werden. Im Rahmen einer Online-Authentisierung erhält der Dienstanbieter 104 gemäß einer Auswahl des Inhabers der Chipkarte 106 ausgewählte Identitätsdaten, die auf der Chipkarte 106 gespeichert sind, sowie den dienstanbieterspezifischen, pseudonymen öffentlichen Schlüssel $K_x$ der Chipkarte

106. Der Dienstanbieter 104 kann den öffentlichen Schlüssel $K_x$ mit dem Pseudonym $I_{k,x}$ verbinden, um den öffentlichen Schlüssel zu authentisieren.

In einer Nutzungsphase kann zu einem späteren Zeitpunkt, beispielsweise asynchron, der Dienstanbieter 104 eine hybridverschlüsselte Nachricht an den Empfänger 102 beispielsweise per Email senden, wobei zur Erzeugung des symmetrischen Schlüssels der öffentliche Schlüssel $K_x$ und ein Geheimnis des Dienstanbieters 104 verwendet werden kann, das ferner in einem Zwischenschlüssel verschlüsselt wird, der zusammen mit der verschlüsselten Nachricht oder über einen getrennten Kommunikationskanal zum Empfänger 102 gesendet werden kann. Der Dienstanbieter 104 kann insbesondere eine zukünftige Kommunikation auch dann initiieren, wenn die Chipkarte 106 nicht in dem Lesegerät 108 eingelegt ist bzw. mit diesem kommuniziert, indem der Dienstanbieter 104 den gespeicherten öffentlichen Schlüssel $K_x$ und die spezifische Basis $B_x$ ausliest und hieraus den symmetrischen Schlüssel zur Verschlüsselung der Nachricht generiert und an den Empfänger 102 überträgt. Lediglich zur Entschlüsselung der Nachricht muss wieder die Chipkarte 106 über das Lesegerät 108 angesprochen werden, um mittels des dort gespeicherten privaten Schlüssels $k$ den symmetrischen Schlüssel zu rekonstruieren.

Gemäß einer beispielhaften Ausgestaltung der vorliegenden Erfindung kann der Empfänger 102 dem Dienstanbieter 104 den pseudonymen Schlüssel $K_x$ dadurch bereitstellen, dass er aus dem auf der Chipkarte 106 gespeicherten privaten Schlüssel $k$ und einer ephemeralen, dienstleisterspezifischen Basis $B_x$ den öffentlichen Schlüssel als $K_x = B_x^k$ generiert und an den Dienstanbieter 104 überträgt. Der Empfänger kann für den weiteren Dienstanbieter 104' ebenfalls einen weiteren öffentlichen Schlüssel bereitstellen, der aus demselben auf der Chipkarte 106 gespeicherten privaten Schlüssel $k$, jedoch einer anderen ephemeralen, dienstleisterspezifischen Basis generiert wird.

Zur Verschlüsselung der Nachricht kann der Dienstanbieter 104 ein Geheimnis wählen, beispielsweise eine Zufallszahl $y$, und einen Zwischenschlüssel als $C_x = B_x^y$ generieren. Ferner kann der Dienstanbieter 104 aus der Zufallszahl $y$ und dem öffentlichen Schlüssel $K_x$ den Wert $Z_S = K_x^y$ berechnen und daraus mittels einer Schlüsselableitungsfunktion einen symmetrischen Schlüssel zur Verschlüsselung der Nachricht ableiten. Der Dienstanbieter 104 kann die verschlüsselte Nachricht und den Zwischenschlüssel $C_x$ an den Empfänger 102 senden.

Der Empfänger 102 kann zumindest den Zwischenschlüssel $C_x$ an die Chipkarte 106 weiterleiten. Mittels des im Speicher der Chipkarte 106 gespeicherten privaten Schlüssels $k$ kann in der Chipkarte 106 der Zwischenwert $Z_E = C_x^k = B_x^{y \cdot k}$ berechnet werden, der bis auf eine Permutation der Exponenten dem Wert $Z_S$ entspricht. Die Chipkarte 106 kann mittels derselben Schlüsselableitfunktion den symmetrischen Schlüssel rekonstruieren und entweder $Z_E$, oder den rekonstruierten symmetrischen Schlüssel an den Empfänger 102 übergeben. Die Chipkarte 106 kann auch die verschlüsselte Nachricht empfangen und die verschlüsselte Nachricht selbst entschlüsseln. Somit kann die Funktionalität der Entschlüsselung zwischen der Chipkarte 106 und einem Rechner des Empfängers 102 oder dem Lesegerät 108 des Empfängers 102 derart aufgeteilt sein, dass sowohl die Entschlüsselung der verschlüsselten Nachricht als auch die Berechnung des öffentlichen Schlüssels in der Chipkarte 106 stattfinden können, wobei eine Potenzierung auf der Chipkarte 106 beispielsweise ungefähr 0,25 sec, 0,1 sec oder weniger dauern kann. In einer Ausführungsform kann die Chipkarte 106 nur die asymmetrische Verschlüsselung, d.h. die Rekonstruktion des symmetrischen Schlüssels übernehmen, während der Rechner des Empfängers 102 die symmetrische Entschlüsselung der Nachricht übernehmen kann.

Die Pseudonymität des Verfahrens wird entscheidend dadurch erreicht, dass für jeden Sender ein Basiswechsel erfolgt, indem eine individuelle, senderspezifische Basis $B_x$ verwendet wird, welche jedoch derart konstruiert ist, dass sie nicht in der Chipkarte 106 gespeichert sein muss. Die Basis $B_x$ und alle weiteren kryptographischen Operationen können hierbei in einer multiplikativ oder additiv geschriebenen kryptographisch sicheren Gruppe G mit einem Generator $g$ erfolgen, wobei der Generator $g$ einmalig festgelegt wird und hiernach senderspezifisch mittels $x$ der Basiswechsel erfolgt. Da insbesondere bei nicht-zyklischen Gruppen die Berechnung eines Generators schwierig sein kann, kann die ephemerale Basis durch eine Potenzierung des Generators $g$ mit der Zufallszahl $x$ als $B_x = g^x$ generiert werden. Hierdurch kann besonders schnell und effizient eine senderspezifische Basis bereitgestellt werden. Da $B_x$ ferner von dem vertrauenswürdigen Dritten 110 bereitgestellt sein kann, kann hierdurch gewährleistet sein, dass durch eine geeignete Wahl von $x$ ephemerale Basen mit einer breiten Streuung generiert werden, welche einen hohen Grad an Pseudonymität garantieren.

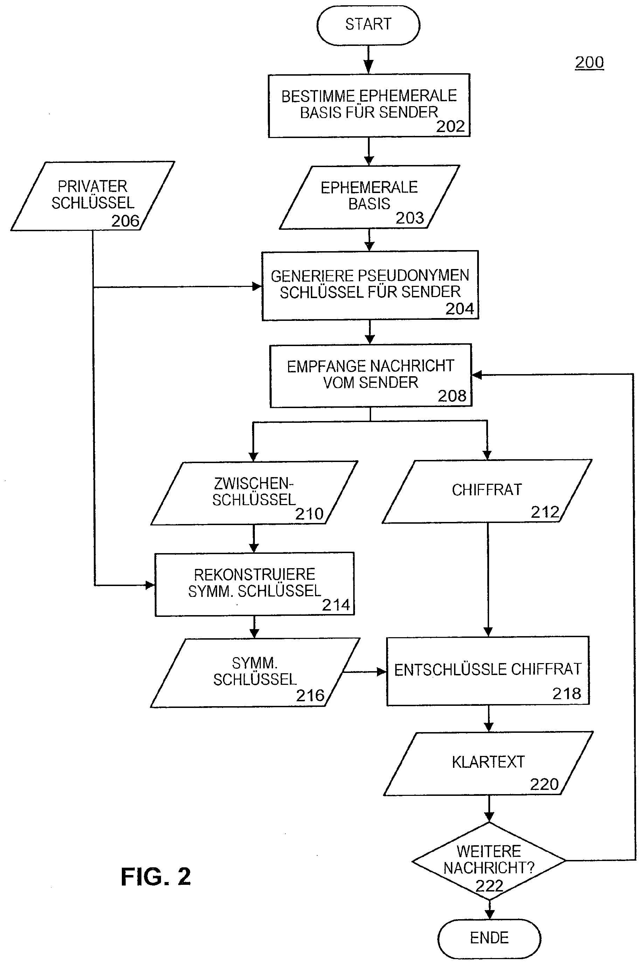

Fig. 2 zeigt ein Flussdiagramm eines Verfahrens 200 zum Bereitstellen von pseudonymen Schlüsseln für ein hybrides Verschlüsselungsverfahren gemäß einer Ausführungsform der vorliegenden Erfindung, das beispielsweise von einem Empfänger oder einem zugeordneten Rechner oder auf einer Chipkarte ausgeführt sein kann, beispielsweise dem Empfänger 102 oder der Chipkarte 106, die in Fig. 1 gezeigt sind.

Nach einer Anforderung eines pseudonymen Schlüssels kann in Schritt 202 eine ephemerale Basis 203 spezifisch für einen Sender bestimmt werden. Diese kann beispielsweise von einem vertrauenswürdigen Dritten empfangen werden. Alternativ kann die ephemerale Basis 203 durch den Empfänger generiert werden. Entweder der vertrauenswürdige Dritten oder der Empfänger können hierzu eine Zufallszahl $x$ wählen und die ephemerale Basis 203 als $B_x = g^x$ generieren. Der Empfänger kann nun im Schritt 204 damit fortfahren einen pseudonymen öffentlichen Schlüssel für den Sender zu generieren, der zumindest teilweise als $K_x = g^{(x \cdot k)}$ berechnet sein kann, wobei $k$ ein privater Schlüssel 206 des Empfängers sein kann. Sowohl die ephemerale Basis 203 als auch der pseudonyme Schlüssel können an den Sender übermittelt werden, beispielsweise einen der Dienstanbieter 104, 104' aus Fig. 1.

In Schritt 208 kann der Empfänger von dem Sender eine Nachricht empfangen, welche einen Zwischenschlüssel 210 und eine verschlüsselte Nachricht oder ein Chiffrat 212 umfassen kann. Zur symmetrischen Verschlüsselung der Nachricht kann der Dienstanbieter ein Geheimnis $y$ wählen und aus dem Geheimnis und dem pseudonymen Schlüssel mittels $Z_S = K_x^y = g^{xky}$ und einer Schlüsselableitfunktion KDF() einen symmetrischen Schlüssel generieren, wobei das Geheimnis vom Sender in einer nicht rückrechenbaren Weise auf der ephemeralen Basis 203 in dem Zwischenschlüssel 210, beispielsweise als $C_x = B_x^y = g^{xy}$, verschlüsselt werden kann.

Der Empfänger kann in Schritt 214 den symmetrischen Schlüssel 216 aus dem Zwischenschlüssel 210 und dem privaten Schlüssels 206 rekonstruieren, indem er einen Zwischenwert $Z_E = C_x^k = g^{xyk}$ berechnet. Da $Z_E = Z_S$ ist, kann der Empfänger aus $Z_E$ mittels der Schlüsselableitfunktion KDF() den symmetrischen Schlüssel 216 rekonstruieren und in Schritt 218 das übermittelte Chiffrat 212 in Klartext 220 korrekt entschlüsseln.

In Schritt 222 wird ermittelt, ob weitere Nachrichten vorliegen oder noch empfangen werden sollen. Im letztgenannten Fall kann das Verfahren 200 weiter mit Schritt 208 fortfahren. Andernfalls endet das Verfahren 200.

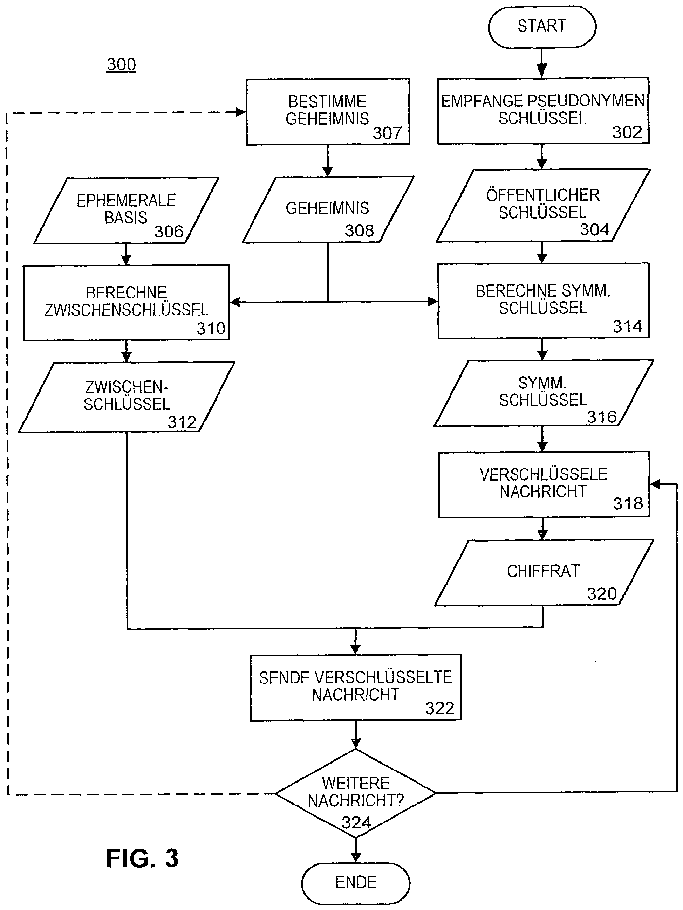

Fig. 3 zeigt ein Verfahren 300 zum Anwenden von pseudonymen Schlüsseln in einem hybriden Verschlüsselungsverfahren gemäß einer Ausführungsform der vorliegenden Erfindung, das beispielsweise von einem Sender ausgeführt werden kann, beispielsweise einem der in Fig. 1 gezeigten Dienstanbieter 104, 104', um hybridverschlüsselte Nachrichten an einen Empfänger zu senden, beispielsweise an den in Fig. 1 gezeigten Empfänger 102 oder die Chipkarte 106.

In einer initialen oder Setup-Phase kann der Sender in Schritt 302 einen pseudonymen Schlüssel von dem Empfänger empfangen. Der pseudonyme Schlüssel kann einen öffentlichen Schlüssel 304 und eine ephemerale Basis 306 umfassen, welche für die Kommunikation zwischen dem Sender und dem Empfänger spezifisch ist. Der öffentliche Schlüssel 304 kann gemäß einem oder mehreren der in Fig. 2 gezeigten Verfahrensschritte des Verfahrens 200, beispielsweise der Verfahrensschritte 202 bis 204 generiert sein. Der Sender kann die ephemerale Basis 306 ebenfalls von einem vertrauenswürdigen Dritten empfangen.

Der Sender kann ein Geheimnis 308 bestimmen, beispielsweise eine Zufallszahl, und das Geheimnis 308 mit der ephemerale Basis 306 in Schritt 310 in einem Zwischenschlüssel 312 verschlüsseln. Zudem kann der Sender in Schritt 314 mittels einer Schlüsselableitfunktion einen symmetrischen Schlüssel 316 aus einem Zwischenwert berechnen, in den sowohl der öffentliche Schlüssel 304 als auch das Geheimnis 308 einfließen, wobei der symmetrische Schlüssel 316 in Schritt 318 zur symmetrischen Verschlüsselung einer Nachricht für den Empfänger verwendet werden kann. Sowohl das Chiffrat 320 der Nachricht als auch der das Geheimnis 308 verschlüsselnde Zwischenschlüssel 312 werden in Schritt 322 an den Empfänger übertragen. Der Empfänger kann nun den symmetrischen Schlüssel aus dem Zwischenschlüssel und seinem privaten Schlüssel unter Verwendung der Schlüsselableitfunktion rekonstruieren und so das Chiffrat 320 entschlüsseln.

In Schritt 324 wird ermittelt, ob eine weitere Nachricht gesendet werden soll, wobei in diesem Fall das Verfahren 300 mit der Verschlüsselung der weiteren Nachricht in Schritt 318 fortfahren kann. Alternativ kann das Verfahren 300 in Schritt 307 fortfahren, was durch eine gestrichelte Linie angedeutet ist, indem ein neues Geheimnis, beispielsweise eine neue Zufallszahl bestimmt wird, wodurch die Sicherheit des hybriden Verschlüsselungsverfahrens weiter erhöht werden kann. Liegen keine weiteren Nachrichten vor, so endet das Verfahren 300.

Es sollte verständlich sein, dass die vorliegende Erfindung nicht auf eine konkrete Ausgestaltung des in der Fig. 1 gezeigten Kommunikationssystems oder der in den Fig. 2 und 3 gezeigten Verfahren beschränkt ist. Beispielsweise kann das Kommunikationssystem aus Fig. 1 eine andere Topologie, eine Vielzahl von Empfängern, eine Vielzahl von Dienstanbietern und eine Vielzahl von vertrauenswürdigen Dritten umfassen. Zudem können die einzelnen Verfahrensschritte der in den Fig. 2 und 3 dargestellten Verfahren in einer anderen als der gezeigten Reihenfolge ausgeführt sein und einzelne Schritte können ausgelassen, ergänzt, wiederholt, permutiert oder insbesondere parallel ausgeführt werden. Beispielsweise können im Verfahren 300 aus Fig. 3 die Verfahrensschritte zum Berechnen des Zwischenschlüssels und des symmetrischen Schlüssels 310 bzw. 314 parallel ausgeführt werden. Ferner können die dargestellten Verfahren und weitere Verfahren gemäß Ausführungsformen der vorliegenden Erfindung computergestützt auf einer oder mehreren Recheneinheiten oder Datenverarbeitungseinheiten ausgeführt werden.

Darüber hinaus können die in der vorstehenden Beschreibung, den Ansprüchen und den Figuren offenbarten Merkmale sowohl einzeln als auch in beliebiger Kombination für die Verwirklichung der Erfindung in ihren verschiedenen Ausführungsformen von Bedeutung sein.

Bezugszeichenliste

| 100 | Kommunikationssystem |
| 102 | Empfänger |
| 104, 104' | Dienstanbieter |
| 105 | Kommunikationsnetzwerk |
| 106 | Chipkarte |
| 107 | Verbindung |
| 108 | Lesegerät |
| 110 | vertrauenswürdiger Dritter |
| 200 | Verfahren |
| 202 | Bestimmen einer ephemeralen Basis |
| 203 | ephemerale Basis |
| 204 | Generieren eines pseudonymen Schlüssels |
| 206 | privater Schlüssel |
| 208 | Empfangen einer Nachricht |
| 210 | Zwischenschlüssel |
| 212 | Chiffrat |
| 214 | Rekonstruieren eines symmetrischen Schlüssels |
| 216 | symmetrischer Schlüssel |
| 218 | Entschlüsseln des Chiffrats |
| 220 | Klartext |
| 222 | weitere Nachricht? |
| 300 | Verfahren |
| 302 | Empfangen eines pseudonymen Schlüssels |
| 304 | öffentlicher Schlüssel |
| 306 | ephemerale Basis |
| 307 | Bestimmen eines Geheimnisses |
| 308 | Geheimnis |
| 310 | Berechnen eines Zwischenschlüssels |
| 312 | Zwischenschlüssel |
| 314 | Berechnen eines symmetrischen Schlüssels |
| 316 | symmetrischer Schlüssel |
| 318 | Verschlüsseln einer Nachricht |
| 320 | Chiffrat |
| 322 | Senden einer Nachricht |
| 324 | weitere Nachricht? |

**Patentansprüche**

1. Verfahren zum Bereitstellen von pseudonymen Schlüsseln für ein hybrides Verschlüsselungsverfahren, das folgende Schritte umfasst:

Bereitstellen (204) eines öffentlichen Schlüssels für einen Sender, wobei der öffentliche Schlüssel basierend auf einem privaten Schlüssel (206) eines Empfängers und einer senderspezifischen Basis (203) generiert wird;
**gekennzeichnet durch**:

Empfangen (208) einer Nachricht von dem Sender, wobei die Nachricht einen Zwischenschlüssel (210) und eine verschlüsselte Nachricht (212) aufweist, wobei der Zwischenschlüssel (210) von dem Sender basierend auf der senderspezifischen Basis (203) und einem Geheimnis des Senders generiert wird und wobei die verschlüsselte Nachricht (212) vom Sender mit einem symmetrischen Schlüssel (216) verschlüsselt ist, der von dem Sender basierend auf dem öffentlichen Schlüssel und dem Geheimnis des Senders generiert wird; und Rekonstruieren (214) des symmetrischen Schlüssels (216) basierend auf dem Zwischenschlüssel (210) und dem privaten Schlüssel (206) zum Entschlüsseln (218) der verschlüsselten Nachricht (212).

2. Verfahren nach Anspruch 1, wobei für jeden weiteren Sender jeweils ein weiterer öffentlicher Schlüssel bereitgestellt wird, der basierend auf dem privaten Schlüssel (206) und einer weiteren senderspezifischen Basis generiert wird.

3. Verfahren nach einem der Ansprüche 1 oder 2, das ferner ein Empfangen (202) der senderspezifischen Basis von einem vertrauenswürdigen Dritten oder von dem Sender umfasst.

4. Verfahren nach einem der vorhergehenden Ansprüche, das ferner ein Generieren eines Zahlenwerts für den Sender, Berechnen der senderspezifischen Basis basierend auf einem Generator einer kryptographisch sicheren Gruppe und dem Zahlenwert und Übertragen der senderspezifischen Basis an den Sender umfasst, wobei der Zahlenwert für den Sender eine Zufallszahl ist oder für den Sender pseudozufällig zumindest teilweise aus Identitätsdaten des Empfängers generiert wird.

5. Verfahren nach einem der vorhergehenden Ansprüche, wobei der öffentliche Schlüssel aus einer Verknüpfung der senderspezifischen Basis und des privaten Schlüssels (206) mit einer Funktion generiert wird, welche eine Einwegfunktion, insbesondere eine Potenz, ist, und wobei der symmetrische Schlüssel durch eine Verknüpfung des Zwischenschlüssels (210) und des privaten Schlüssels (206) mit der Funktion rekonstruiert wird.

6. Verfahren nach einem der vorhergehenden Ansprüche, wobei der öffentliche Schlüssels als $K_x = B_x^k$ generiert wird, der Zwischenschlüssel (210) als $C_x = B_x^y$ generiert wird, der symmetrische Schlüssel mittels eines Schlüsselgenerators basierend auf

$Z_S = K_x^y$ generiert wird und mittels des Schlüsselgenerators basierend *auf* $Z_E = C_x^k$ rekonstruiert wird, wobei $B_x$ die senderspezifische Basis, *k* der private Schlüssel (206) des Empfängers und *y* das Geheimnis des Senders sind.

7. Verfahren nach einem der vorhergehenden Ansprüche, das ferner ein Überprüfen der Integrität der verschlüsselten Nachricht umfasst, wobei das Überprüfen der Integrität ein Verifizieren eines von dem Sender mittels einer Funktion zur Erzeugung eines Message Authentication Codes erzeugten Message Authentication Codes (MAC) aufweist.

8. Verfahren nach einem der vorhergehenden Ansprüche, das ferner ein Signieren des öffentlichen Schlüssels mit einer pseudonymen Signatur umfasst.

9. Verfahren zum Verwenden von pseudonymen Schlüsseln in einem hybriden Verschlüsselungsverfahren, das folgende Schritte umfasst:

Empfangen (302) eines öffentlichen Schlüssels (304) von einem Empfänger an einem Sender, wobei der öffentliche Schlüssel (304) von dem Empfänger für den Sender basierend auf einem privaten Schlüssel des Empfängers und einer Basis (306) generiert wird, die für eine Kommunikation zwischen dem Empfänger und dem Sender spezifisch ist;
Generieren (314) eines symmetrischen Schlüssels (316) basierend auf dem öffentlichen Schlüssel und einem Geheimnis (308);
Generieren (310) eines Zwischenschlüssels (312) basierend auf der Basis (306) und dem Geheimnis (308);
Verschlüsseln einer Nachricht mit dem symmetrischen Schlüssel; und
Senden (322) einer Nachricht, die sowohl den Zwischenschlüssel (312) als auch die verschlüsselte Nachricht (320) aufweist, an den Empfänger, wobei der symmetrische Schlüssel (316) von dem Empfänger basierend auf dem Zwischenschlüssel (312) und dem privaten Schlüssel des Empfängers zum Entschlüsseln der verschlüsselten Nachricht (320) rekonstruierbar ist.

10. Hybrides Verschlüsselungsverfahren mit pseudonymen Schlüsseln zum Verschlüsseln von Nachrichten zwischen einer Vielzahl von Sendern und einem Empfänger, das folgende Schritte umfasst:

Speichern eines privaten Schlüssels des Empfängers durch den Empfänger;

Bereitstellen jeweils eines öffentlichen Schlüssels für jeden Sender aus der Vielzahl von Sendern durch den Empfänger, wobei jeder öffentliche Schlüssel von dem Empfänger basierend auf dem privaten Schlüssel des Empfängers und einer jeweils anderen senderspezifischen Basis generiert wird;

Generieren eines symmetrischen Schlüssels durch einen Sender aus der Vielzahl von Sendern basierend auf dem entsprechenden öffentlichen Schlüssel und einem Geheimnis;

Generieren eines Zwischenschlüssels durch den Sender basierend auf der entsprechenden senderspezifischen Basis und dem Geheimnis;

Verschlüsseln einer Nachricht mit dem symmetrischen Schlüssel;

Übertragen einer Nachricht, die sowohl den Zwischenschlüssel als auch die verschlüsselte Nachricht aufweist, zwischen dem Sender und dem Empfänger; und

Rekonstruieren des symmetrischen Schlüssels durch den Empfänger basierend auf dem Zwischenschlüssel und dem privaten Schlüssel zum Entschlüsseln der verschlüsselten Nachricht.

11. System mit einem Empfänger (102) und einem oder mehreren Sendern (104, 104'), wobei der Empfänger (102) Folgendes umfasst:

einen Speicher, der eingerichtet ist, einen privaten Schlüssel zu speichern;

eine Schnittstelle, die eingerichtet ist, einen öffentlichen Schlüssel für einen Sender aus dem einen oder den mehreren Sendern (104, 104') bereitzustellen und eine Nachricht, die einen Zwischenschlüssel und eine verschlüsselte Nachricht aufweist, von dem Sender (104, 104') zu empfangen; und

eine Verarbeitungseinheit, die an den Speicher und an die Schnittstelle gekoppelt ist und eingerichtet ist, den öffentlichen Schlüssel für den Sender (104, 104') basierend auf dem privaten Schlüssel und einer senderspezifischen Basis zu generieren und einen symmetrischen Schlüssel basierend auf dem Zwischenschlüssel und dem privaten Schlüssel zum Entschlüsseln der mit dem symmetrischen Schlüssel verschlüsselten Nachricht zu rekonstruieren, wobei der Zwischenschlüssel von dem Sender (104, 104') basierend auf der senderspezifischen Basis und einem Geheimnis des Senders (104, 104') generiert ist und der symmetrische Schlüssel von dem Sender (104, 104') basierend auf dem öffentlichen Schlüssel und dem Geheimnis des Senders (104, 104') generiert ist.

12. System nach Anspruch 11, wobei die Verarbeitungseinheit ferner eingerichtet ist, die verschlüsselte Nachricht mit dem rekonstruierten symmetrischen Schlüssel zu entschlüsseln.

13. System nach Anspruch 11 oder 12, wobei die Verarbeitungseinheit ferner eingerichtet ist, einen Zahlenwert für den Sender (104, 104') zu erzeugen und die senderspezifische Basis zumindest teilweise basierend auf einem Generator einer kryptographisch sicheren Gruppe und dem Zahlenwert zu berechnen, wobei die Schnittstelle ferner eingerichtet ist, die senderspezifische Basis an den Sender (104, 104') zu übertragen, wobei der Empfänger (102) ferner einen Zufallszahlengenerator umfasst, der eingerichtet ist, den Zahlenwert für den Sender (104, 104') als eine Zufallszahl oder eine Pseudozufallszahl zu generieren.

14. System nach Anspruch 13, wobei der Speicher ferner Identitätsdaten eines Benutzers des Empfängers (102) speichert, wobei die Verarbeitungseinheit ferner eingerichtet ist, den Zahlenwert für den Sender (104, 104') pseudozufällig zumindest teilweise aus den Identitätsdaten zu generieren.

15. System nach einem der Ansprüche 11 bis 14, wobei zumindest der Speicher, die Schnittstelle und die Verarbeitungseinheit auf einer Chipkarte (106) angeordnet sind und das System ferner ein Lesegerät (108) umfasst, das zur bidirektionalen Kommunikation mit der Chipkarte (106) eingerichtet ist.

**Claims**

1. Method for providing pseudonymous keys for a hybrid encryption method, comprising the following steps:

providing (204) a public key for a sender, wherein the public key is generated on the basis of a private key (206) of a receiver and a sender-specific basis (203);

**characterized by**

receiving (208) of a message from the sender, wherein the message comprises an intermediate key (210) and an encrypted message (212), wherein the intermediate key (210) of the sender is generated on the basis of the sender-specific basis (203) and a secret of the sender, and wherein the encrypted message (212) from the sender is encrypted by a symmetric key (216), which is generated by the sender on the basis of the public key and the secret of the sender; and

reconstructing (214) of the symmetric key (216) on the basis of the intermediate key (210) and the private key (206) for the decryption (218) of the encrypted message (212).

2. Method according to claim 1, wherein, in each case, a further public key is provided for each further sender, which is generated on the basis of the private key (206) and the further sender-specific basis.

3. Method according to any one of claims 1 or 2, which further comprises receiving (202) of the sender-specific basis from a trustworthy third party or from the sender.

4. Method according to any one of the preceding claims, which further comprises generating of a numerical value for the sender, calculating of the sender-specific basis, based on a generator of a cryptographically secure group and the numerical value, and transferring of the sender-specific basis to the sender, wherein the numerical value for the sender is a random number or is generated for the sender pseudo-randomly at least partially from identity data of the receiver.

5. Method according to any one of the preceding claims, wherein the public key is generated from a linking of the sender-specific basis and the private key (206) with a function, which is a one-way function, in particular a power, and wherein the symmetric key is reconstructed by a linking of the intermediate key (210) and the private key (206) with the function.

6. Method according to any one of the preceding claims, wherein the public key is generated as $K_x = B^k_x$, the intermediate key (210) as $C_x = B^y_x$, the symmetric key is generated by means of a key generator based on $Z_S = K^y_x$ and is reconstructed by means of the key generator based on $Z_E = C^k_x$ wherein $B_x$ is the sender-specific basis, $k$ is the private key (206) of the receiver, and $y$ the secret of the sender.

7. Method according to any one of the preceding claims, which further comprises checking of the integrity of the encrypted message, wherein the checking of the integrity comprises a verification of a Message Authentication Code (MAC) which is produced by the sender by means of a function for producing a Message Authentication Code.

8. Method according to any one of the preceding claims, which further comprises signing of the public key with a pseudonym signature.

9. Method for the use of pseudonymous keys in a hybrid encryption process, which comprises the following steps:

   receiving (302) of a public key (304) from a receiver to a sender, wherein the public key (304) is generated by the receiver for the sender, on the basis of a private key of the receiver and a basis (306), which is specific for a communication between the receiver and the sender;
   generating (314) of a symmetric key (316) on the basis of the public key and a secret (308);
   generating (310) of an intermediate key (312) on the basis of the basis (306) and the key (308);
   encrypting of a message with the symmetric key; and
   sending (322) of a message, which comprises both the intermediate key (312) as well as the encrypted message (320), to the receiver, wherein the symmetric key (316) can be reconstructed by the receiver on the basis of the intermediate key (312) and the private key of the receiver, for the de-encrypting of the encrypted message (320).

10. Hybrid encryption method with pseudonymous keys for the encrypting of messages between a plurality of senders and one receiver, which comprises the following steps:

    storing of a private key of the receiver by the receiver;
    providing in each case a public key for each sender from the plurality of senders by the receiver, wherein each public key is generated by the receiver on the basis of the private key of the receiver and a sender-specific basis which is different in each case;
    generating of a symmetric key by a sender from the plurality of senders on the basis of the corresponding public key and a secret;
    generating of an intermediate key by the sender on the basis of the corresponding sender-specific basis and the secret;
    encrypting of a message with the symmetric key;
    transferring of a message, which comprises both the intermediate key as well as the encrypted message, between the sender and the receiver; and
    reconstructing the symmetric key by the receiver on the basis of the intermediate key and the private key, for de-encrypting the encrypted message.

11. System with a receiver (102) and one of more senders (104, 104'), wherein the receiver (102) comprises the following:

    a memory store, which is configured to store a private key;
    an interface, which is configured to provide a public key for a sender from the one or more senders (104, 104') and to receive a message which comprises an intermediate key and an encrypted message from the sender (104, 104'); and

a processing unit, which is coupled to the memory store and to the interface and is configured so as to generate the public key for the sender (104, 104') on the basis of the private key and a sender-specific basis, and to decrypt a symmetric key on the basis of the intermediate key and the private key, so as to reconstruct the message encrypted with the symmetric key, wherein the symmetric key is generated by the sender (104, 104') on the basis of the sender-specific basis and a secret of the sender (104, 104'), and the symmetric key is generated by the sender (104, 104') on the basis of the public key and the secret of the sender (104, 104').

**12.** System according to claim 11, wherein the processing unit is further configured to decrypt the encrypted message with the reconstructed symmetric key.

**13.** System according to claim 11 or 12, wherein the processing unit is further configured so as to produce a numerical value for the sender (104, 104'), and to calculate the sender-specific basis at least partially on the basis of a generator of a cryptographically secure group and on the numerical value, wherein the interface is further configured to transfer the sender-specific basis to the sender (104, 104'), wherein the receiver (102) further comprises a random-figure generator which is configured so as to generate the numerical value for the sender (104, 104') as a random number or a pseudo-random number.

**14.** System according to claim 13, wherein the memory store further stores identity data of a user of the receiver (102), wherein the processing unit is further configured so as to generate the numerical value for the sender (104, 104') pseudo-randomised at least partially from the identity data

**15.** System according to any one of claims 11 to 14, wherein at least the memory store, the interface, and the processing unit are arranged on a chip card (106), and the system further comprises a reader device (108), which is configured for bidirectional communication with the chip card (106).

**Revendications**

**1.** Procédé pour la mise à disposition de clés pseudonymes pour un procédé de chiffrement hybride, qui comprend les étapes suivantes :

mise à disposition (204) d'une clé publique à un émetteur, la clé publique étant générée sur la base d'une clé privée (206) d'un récepteur et d'une base spécifique à l'émetteur (203) ; **caractérisé par** :

la réception (208) d'un message par l'émetteur, le message comprenant une clé intermédiaire (210) et un message chiffré (212), la clé intermédiaire (210) étant générée par l'émetteur sur la base de la base spécifique à l'émetteur (203) et d'un secret de l'émetteur, et le message chiffré (212) étant chiffré par l'émetteur avec une clé symétrique (216), qui est générée par l'émetteur sur la base de la clé publique et du secret de l'émetteur ; et la reconstruction (214) de la clé symétrique (216) sur la base de la clé intermédiaire (210) et de la clé privée (206) pour le déchiffrement (218) du message chiffré (212).

**2.** Procédé selon la revendication 1, moyennant quoi, pour chaque émetteur supplémentaire, une clé publique supplémentaire est mise à disposition, qui est générée sur la base de la clé privée (206) et d'une base spécifique à l'émetteur supplémentaire.

**3.** Procédé selon l'une des revendications 1 ou 2, qui comprend en outre une réception (202) de la base spécifique à l'émetteur par un tiers digne de confiance ou par l'émetteur.

**4.** Procédé selon l'une des revendications précédentes, qui comprend en outre la génération d'une valeur numérique pour l'émetteur, le calcul de la base spécifique à l'émetteur sur la base d'un générateur d'un groupe cryptographiquement sûr et de la valeur numérique et la transmission de la base spécifique à l'émetteur à l'émetteur, la valeur numérique pour l'émetteur étant un nombre aléatoire ou étant généré pour l'émetteur de manière pseudo-aléatoire au moins partiellement à partir des données d'identité du récepteur.

**5.** Procédé selon l'une des revendications précédentes, la clé publique étant générée à partir d'une combinaison de la base spécifique à l'émetteur et de la clé privée (206) avec une fonction qui est une fonction à sens unique, plus particulièrement une puissance, et la clé symétrique étant reconstruite par une combinaison de la clé intermédiaire (210) et de la clé privée (206) avec la fonction.

**6.** Procédé selon l'une des revendications précédentes, la clé publique étant générée en tant que $K_x = B^k_x$, la clé intermédiaire (210) étant générée en tant que $C_x = B^y_x$, la clé symétrique étant générée au moyen d'un générateur de clés sur la base de $Z_s =$

$K^y_x$ et reconstruite au moyen du générateur de clés sur la base de $Z_E = C^k_x$, $B_x$ étant la base spécifique à l'émetteur, k étant la clé privée (206) du récepteur et y le secret de l'émetteur.

**7.** Procédé selon l'une des revendications précédentes, qui comprend en outre une vérification de l'intégrité du message chiffré, la vérification de l'intégrité comprenant une vérification d'un Message Authentication Code (MAC) généré par l'émetteur au moyen d'une fonction pour la génération d'un Message Authentication Code.

**8.** Procédé selon l'une des revendications précédentes, qui comprend en outre une signature de la clé publique avec une signature pseudonyme.

**9.** Procédé pour l'utilisation de clés pseudonymes dans un procédé de chiffrement hybride, qui comprend les étapes suivantes :

réception (302) d'une clé publique (304) en provenance d'un récepteur au niveau d'un émetteur, la clé publique (304) étant générée par le récepteur pour l'émetteur sur la base d'une clé privée du récepteur et d'une base (306), qui est spécifique à une communication entre le récepteur et l'émetteur ;

génération (314) d'une clé symétrique (316) sur la base de la clé publique et d'un secret (308) ;

génération (310) d'une clé intermédiaire (312) sur la base de la base (306) et du secret (308) ;

chiffrement d'un message avec la clé symétrique ; et

envoi (322) d'un message, qui comprend la clé intermédiaire (312) ainsi que le message chiffré (320), au récepteur, la clé symétrique (316) pouvant être reconstruite par le récepteur sur la base de la clé intermédiaire (312) et de la clé privée du récepteur pour le déchiffrement du message chiffré (320).

**10.** Procédé de chiffrement hybride avec des clés pseudonymes pour le chiffrement de message entre une pluralité d'émetteurs et un récepteur, qui comprend les étapes suivantes :

enregistrement d'une clé privée du récepteur par le récepteur ;

mise à disposition d'une clé publique pour chaque émetteur parmi la pluralité d'émetteurs par le récepteur, chaque clé publique étant générée par le récepteur sur la base de la clé privée du récepteur et d'une autre base spécifique à l'émetteur ;

génération d'une clé symétrique par un émetteur parmi la pluralité d'émetteurs sur la base de la clé publique correspondante et d'un secret ;

génération d'une clé intermédiaire par l'émetteur sur la base de la base spécifique à l'émetteur correspondante et du secret ;

chiffrement d'un message avec la clé symétrique ;

transmission d'un message, qui comprend la clé intermédiaire ainsi que le message chiffré, entre l'émetteur et le récepteur ; et

reconstruction de la clé symétrique par le récepteur sur la base de la clé intermédiaire et de la clé privée pour le déchiffrement du message chiffré.

**11.** Système avec un récepteur (102) et un ou plusieurs émetteurs (104, 104'), le récepteur (102) comprenant ce qui suit :

une mémoire qui est conçue pour enregistrer une clé privée ;

une interface qui est conçue pour mettre à disposition une clé publique pour un émetteur parmi l'un ou plusieurs émetteurs (104, 104') et pour recevoir un message qui comprend une clé intermédiaire et un message chiffré en provenance de l'émetteur (104, 104') ; et

une unité de traitement qui est couplée à la mémoire et à l'interface et qui est conçue pour générer la clé publique pour l'émetteur (104, 104') sur la base de la clé privée et d'une base spécifique à l'émetteur et pour reconstruire une clé symétrique sur la base de la clé intermédiaire et de la clé privée pour le déchiffrement du message chiffré avec la clé symétrique, la clé intermédiaire étant générée par l'émetteur (104, 104') sur la base de la base spécifique à l'émetteur et d'un secret de l'émetteur (104, 104') et la clé symétrique étant générée par l'émetteur (104, 104') sur la base de la clé publique et du secret de l'émetteur (104, 104').

**12.** Système selon la revendication 11, l'unité de traitement étant en outre conçue pour déchiffre le message chiffré avec la clé symétrique reconstruite.

**13.** Système selon la revendication 11 ou 12, l'unité de traitement étant en outre conçue pour générer une valeur numérique pour l'émetteur (104, 104') et pour calculer l base spécifique à l'émetteur au moins partiellement sur la base d'un générateur d'un groupe cryptographiquement sûr et de la valeur numérique, l'interface étant en outre conçue pour transmettre la base spécifique à l'émetteur à l'émetteur (104, 104'), le récepteur (102) comprenant en outre un générateur de nombres aléatoires qui est conçu pour générer la valeur numérique pour l'émetteur (104, 104') sous la forme d'un nombre aléatoire ou d'un nombre pseudo-aléatoire.

**EP 3 050 244 B1**

**14.** Système selon la revendication 13, la mémoire enregistrant en outre les données d'identité d'un utilisateur du récepteur (102), l'unité de traitement étant en outre conçue pour générer la valeur numérique pour l'émetteur (104, 104') de manière pseudo-aléatoire au moins partiellement à partir des données d'identité.

**15.** Système selon l'une des revendications 11 à 14, au moins la mémoire, l'interface et l'unité de traitement étant disposées sur une carte à puce (106) et le système comprenant en outre un appareil de lecture (108) qui est conçu pour la communication bidirectionnelle avec la carte à puce (106).

FIG. 1

200

START

BESTIMME EPHEMERALE
BASIS FÜR SENDER
202

EPHEMERALE
BASIS
203

PRIVATER
SCHLÜSSEL
206

GENERIERE PSEUDONYMEN
SCHLÜSSEL FÜR SENDER
204

EMPFANGE NACHRICHT
VOM SENDER
208

ZWISCHEN-
SCHLÜSSEL
210

CHIFFRAT
212

REKONSTRUIERE
SYMM. SCHLÜSSEL
214

SYMM.
SCHLÜSSEL
216

ENTSCHLÜSSLE CHIFFRAT
218

KLARTEXT
220

WEITERE
NACHRICHT?
222

FIG. 2

ENDE

300

```
                                                              ┌─────────────┐
                                                              │    START    │
                                                              └─────────────┘
                                                                     │
                                                                     ▼
                        ┌──────────────┐              ┌──────────────────────┐
                        │  BESTIMME    │              │ EMPFANGE PSEUDONYMEN  │
                        │  GEHEIMNIS   │              │ SCHLÜSSEL             │
                        │         307  │              │                  302  │
                        └──────────────┘              └──────────────────────┘
```

BESTIMME GEHEIMNIS 307

EMPFANGE PSEUDONYMEN SCHLÜSSEL 302

EPHEMERALE BASIS 306

GEHEIMNIS 308

ÖFFENTLICHER SCHLÜSSEL 304

BERECHNE ZWISCHENSCHLÜSSEL 310

BERECHNE SYMM. SCHLÜSSEL 314

ZWISCHEN-SCHLÜSSEL 312

SYMM. SCHLÜSSEL 316

VERSCHLÜSSELE NACHRICHT 318

CHIFFRAT 320

SENDE VERSCHLÜSSELTE NACHRICHT 322

WEITERE NACHRICHT? 324

ENDE

**FIG. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011150212 A1

**In der Beschreibung aufgeführte Nicht-Patentliteratur**

- Receiver anonymity via incomparable public keys. **WATERS B R et al.** Proceedings of the 10th ACM Conference on computer and communications security. ACM Conference on Computer and Communications Security, 2003